# EUROPEAN PATENT APPLICATION

(11) **EP 2 169 539 A1**
(43) Date of publication of application: **31.03.2010**
(21) Application number: 07767264.0
(22) Date of filing: 20.06.2007
(51) Int. Cl.: G06F 9/38

(54) **INSTRUCTION CONTROL DEVICE AND INSTRUCTION CONTROL METHOD**

(71) Applicant: Fujitsu Limited, Kawasaki-shi, Kanagawa 211-8588 (JP)
(72) Inventor: YOSHIDA, Toshio, Kawasaki-shi Kanagawa 211-8588 (JP)
(74) Representative: Wilding, Frances Ward
(86) International application number: PCT/JP2007/062426
(87) International publication number: WO 2008/155840

(57) **Abstract**

In a CPU (10) having a SMT function of executing plural threads composed of a series of instructions representing processing, there are provided a decode section (109) for decoding processing represented by instructions of plural threads, an instruction buffer (104) for obtaining instructions from a thread and holding the instructions, and inputting the held instructions to the decode section (109) in order in the thread, andanexecutionpipeline (220) forexecutingprocessing of instructions decoded by the decode section. The decode section (109) checks whether or not an executable condition is ready for an instruction when the instruction is decoded and requests that the instructions held in the instruction buffer (104) and an instruction subsequent to an instruction that is not ready with an executable condition are inputted again to the decode section.

## Description

### Technical Field

The present invention relates to an instruction control apparatus equipped with a simultaneous multi-threading function of executing simultaneously two or more threads composed of a series of instructions expressing processing and to an instruction control method.

### Background Art

An instruction expressing processing is processed in an instruction control apparatus typified by a CPU, through a series of steps such as fetch of the instruction (fetch), decode of the instruction (decode) , execute of the instruction, and commit of a result of the execution (commit). Conventionally, there is a processing mechanism called pipeline to speed up processing at each step in an instruction control apparatus. In the pipeline, processing at each step like fetch and decode is performed in each separate small mechanism. This enables concurrent execution of another instruction while executing one instruction or the like, thereby enhancing the speed of processing in the instruction control apparatus.

Recently, a processing mechanism called superscalar provided with two or more pipelines to further enhance a speed of processing is widely used. As a function to realize ever faster processing in the superscalar, there is a function called out-of-order execution.

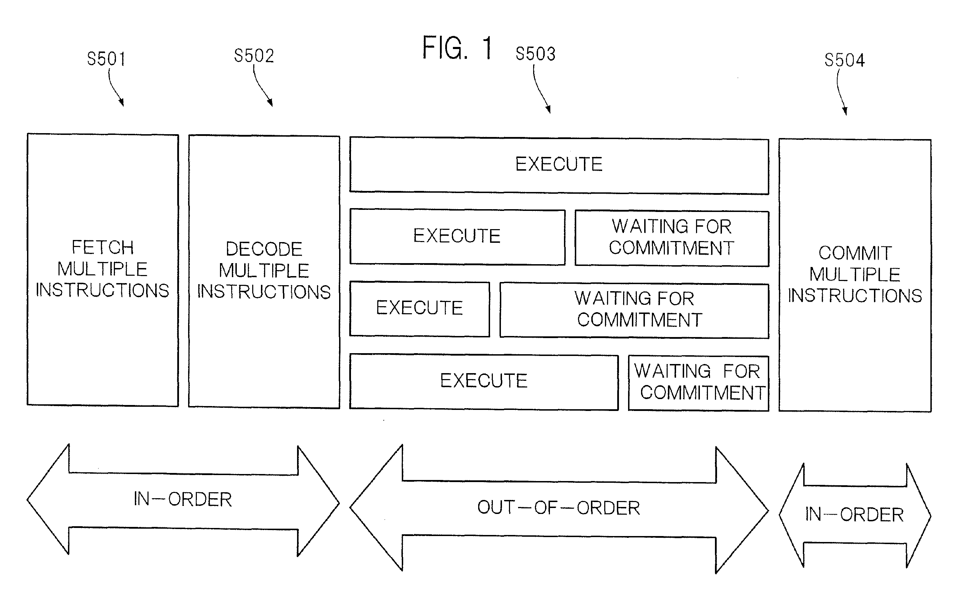

FIG. 1 is a conceptual diagram illustrating out-of-order execution in superscalar.

FIG. 1 illustrates one example of the out-of-order execution in superscalar.

In the example of FIG. 1, four instructions are being processed. Each instruction is processed through four steps of fetch (step S501), decode (step S502), execute (step S503), and commit (step S504). For the four instructions, fetch (step S501), decode (step S502), and commit (step S504) are executed by in-order execution where processing is executed in a program execution order. And execute of instructions (step S503) is executed by out-of-order execution where processing is executed regardless of a processing order in a program.

The four instructions are fetched in order in a program (step S501) and decoded (step S502). Thereafter, the instructions are placed for execution (step S503) not in that processing order, but in an order in which an instruction where calculation information and the like (operand) necessary for execution (step S501) are obtained. In the example of FIG. 1, operands are obtained at the same time for the four instructions, and the instructions start being executed simultaneously.

In this way, out-of-order execution enables two or more instructions to be processed simultaneously in parallel irrelevant to a processing order in a program, thereby enhancing a processing speed in an instruction control apparatus.

After the execute (step S503), commit (step S504) of the four instructions is executed by in-order execution according to a program order. A subsequent instruction which has completed in execution (step S503) ahead of its preceding instruction in this processing order is put into a state of waiting for commit until the preceding instruction is completed in execution (step S503). In the example of FIG. 1, execute (step S503) of the four instructions is illustrated in four stages such that an instruction at the topmost stage in the drawing is processed first in program order. In the example of FIG. 1, since it takes a longest time to complete execution of the instruction illustrated at the topmost stage and processed first (step S503), other three instructions are waiting for commit.

Incidentally, of recent, many programs processed in an instruction control apparatus are composed by combining two or more processing blocks (threads) that are made up of a series of instructions and that may be executed simultaneously in parallel.

Instruction control apparatuses contain two or more computing units for executing instructions. When an instruction is executed, in most cases, only a part of the computing units is used in each cycle, allowing sufficient margin for operating ratio of the computing units.

In this regard, as a technique of improving the operating ratio of the computing units, there is proposed a technique of Simultaneous Multi Threading (SMT) function to process instructions in multiple threads simultaneously by allocating a computing unit that is not in use for one thread to another thread in each cycle.

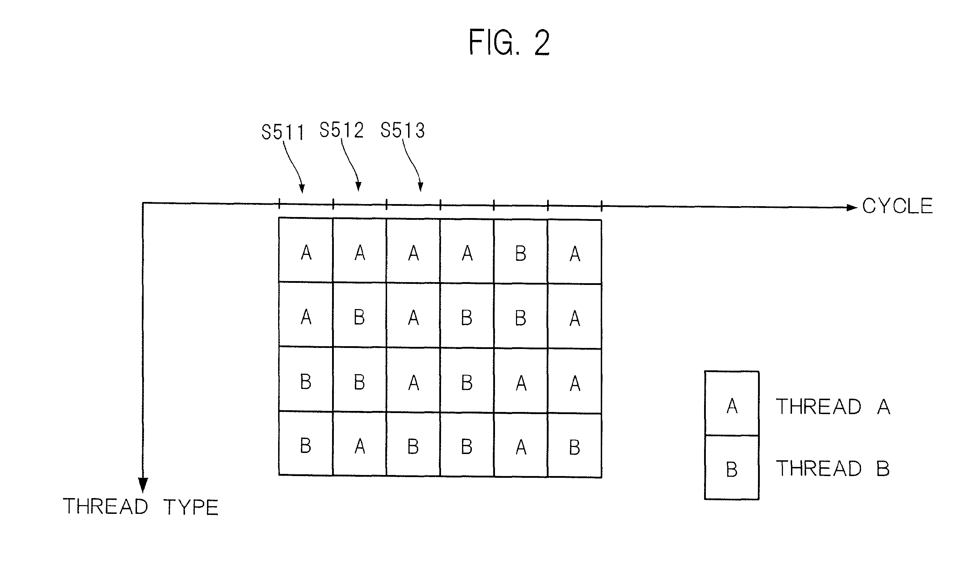

FIG. 2 is a conceptual diagram illustrating one example of a SMT function.

FIG. 2 illustrates a state in which instructions that belong to two types of threads, thread A and thread B are executed by the SMT function. Each of four cells arranged in a vertical axis direction in FIG. 2 represents a computing unit for executing an instruction in the instruction control apparatus. Letters "A" and "B" written in each of the cells indicate a thread type of an instruction to be executed in a corresponding computing unit.

Further, a lateral axis indicates clock cycle in the instruction control apparatus. In the example of FIG. 2, in the first cycle (step S511), instructions in the thread A are executed in two computing units at upper stages whereas instructions in the thread B are executed in two computing units at lower stages. In the second cycle (step S512), instructions in the thread A are executed in the uppermost and lowermost computing units whereas instructions in the thread Bare executed in two computing units at middle stages. Further, in the third cycle (step S513), instructions in thread A are executed in three computing units at upper stages whereas instructions in thread B are executed in one computing unit at the lowermost stage.

In this way, the SMT function executes instructions in multiple threads simultaneously in parallel in each cycle.

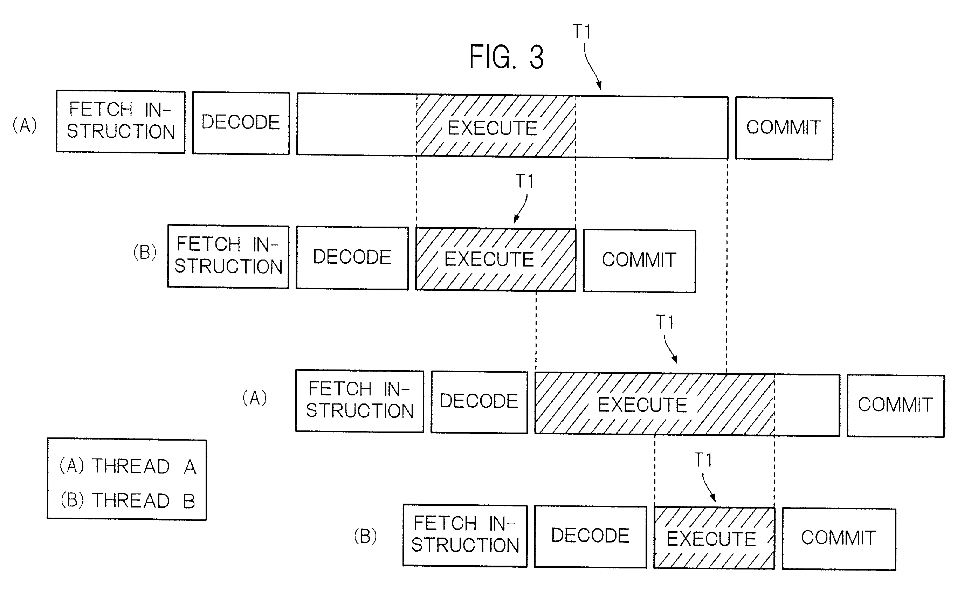

FIG. 3 is another conceptual diagram, different from FIG. 2 illustrating one example of the SMT function.

In the example of FIG. 3, after instructions belonging to two types of threads, the thread A and the thread B are alternately fetched and decoded, the instructions are executed simultaneously in parallel between the two types of threads as illustrated in FIG. 2, when an operand or a computing unit necessary for execution of each instruction is obtained. In the example of FIG. 3, in a timing T1 illustrated as diagonally shaded areas in the drawing, the instructions are executed simultaneously in parallel between the two types of threads.

As to commit, between threads of a same type, it is impossible to commit a subsequent instruction until commit for all preceding instructions has been completed. However, between threads of different types, a subsequent instruction is committed without waiting for commit completion of its preceding instruction. In the example of FIG. 3, fetched instructions in the thread B are committed without waiting for commit completion of fetched instructions in the thread A.

As described with reference to FIGS. 2 and 3, according to the SMT function, it is possible to execute instructions simultaneously in parallel between plural types of threads. Further, between different types of threads, it is possible to commit a subsequent instruction without waiting for commit completion of a preceding instruction, and therefore the efficiency in processing of the instruction control apparatus is improved.

An instruction control apparatus with the SMT function contains so-called program visible elements where access is instructed in a program in equal number of threads, to enable simultaneous execution of instructions between different types of threads. Access to the program visible components is directed in a program. On the other hand, a computing unit and a decode section are often commonly used between different types of threads. As described above, as to the computing unit, since plural computing units are allocated and used between plural types of threads, it is possible to execute instructions simultaneously between plural types of threads without providing computing units as many as the number of threads. However, as to the decode section, since a circuit structure is complicated and large-scaled, in many cases only one decode section is provided in contrast to the computing units. In this case, the decode section is commonly used between plural types of threads, and instructions of only one thread may be decoded at a time. Here, some instructions are prohibited frombeing simultaneously executed with a preceding instruction in a same thread. In this way, a state in which processing of an instruction may not be executed due to a certain factor is called stall. And a factor causing the stall is called a stall factor.

Conventionally, an instruction that has confirmed to stall is to be held in the decode section, until a required condition is satisfied to resolve a stall factor.

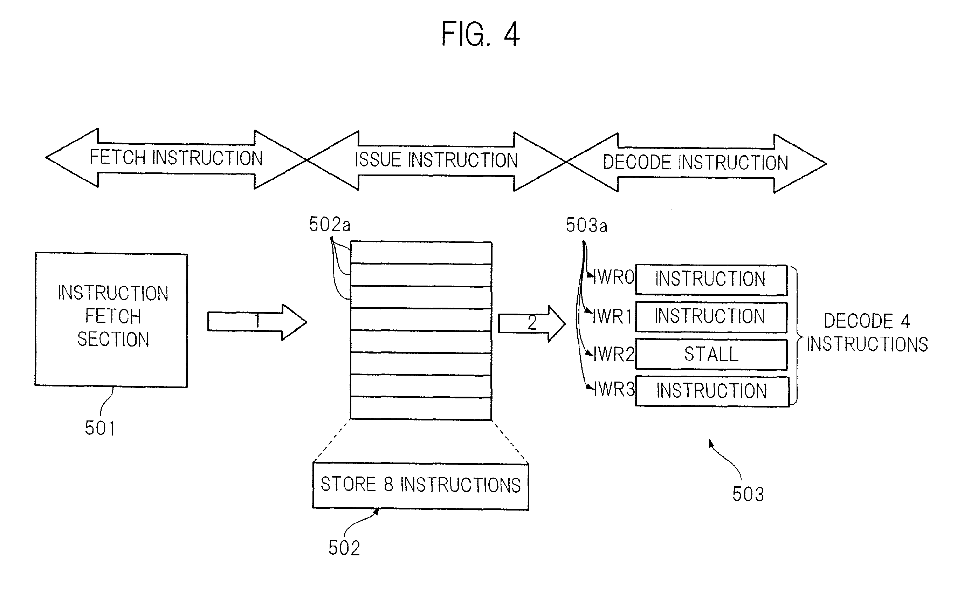

FIG. 4 is a diagram illustrating a state in which stall occurs in an instruction decode section in a control apparatus of single-threading type.

In the example of FIG. 4, eight instructions are fetched into an instruction buffer 502 in one fetch by an instruction fetch section 501. The instruction buffer 502 contains multiple entries (IBR: Instruction BuffeR) 502a where eight instructions before decoding are held in a same order as a processing order in a thread.

The instruction buffer 502 sequentially inputs four instructions stored in the IBR502a to a decode section 503. The decode section 503 contains four registers (IWR: Instruction Word Registers) 503a for storing these inputted instructions one by one, and the four instructions are sequentially stored into the IWR 503a. The decode section 503 sequentially decodes these four stored instructions and delivers the decoded four instructions to an execution section in a downstream stage. If there is an instruction that has confirmed not to be immediately executed and to stall as described above, the deliver to the execution section stops immediately before the stall instruction. In the example of FIG. 4, of the four decoded instructions, the third instruction is confirmed to stall, so that the deliver to the execution section stops after the second instruction.

In an instruction control apparatus with the SMT function, if an instruction in a thread stalls in the decode section, the decode section is occupied by an instruction in a thread, thus hindering an instruction in another thread from being decoded.

Here, regarding an instruction control apparatus of single-threading type for processing a single thread program, there is proposed a technique of moving an instruction confirmed to stall into a predetermined memory so that a decode section is made available to a subsequent instruction and executing the instruction confirmed to stall after obtaining an execution result of a preceding instruction (See Japanese Laid-open Patent Publication No. H07-271582, for example). This technique enables the above-described out-of-order execution smoothly. However, even if this technique is applied to an instruction control apparatus with the SMT function, a subsequent instruction in a same thread as that of the instruction confirmed to stall is made to wait for commit until a stall factor of the instruction confirmed to stall is resolved and commit completes. In this way, even if the occupied state of the decode section may be temporarily avoided, the decode section will be eventually occupied by another instruction in the thread.

Further, there is proposed a technique in which if it is confirmed that an instruction is stalled with respect to a thread, the instruction is invalidated to allow a decode section available for another thread and the instruction will be restarted from fetch after stall is resolved (See Japanese Laid-open Patent Publication No. 2001-356903, for example).

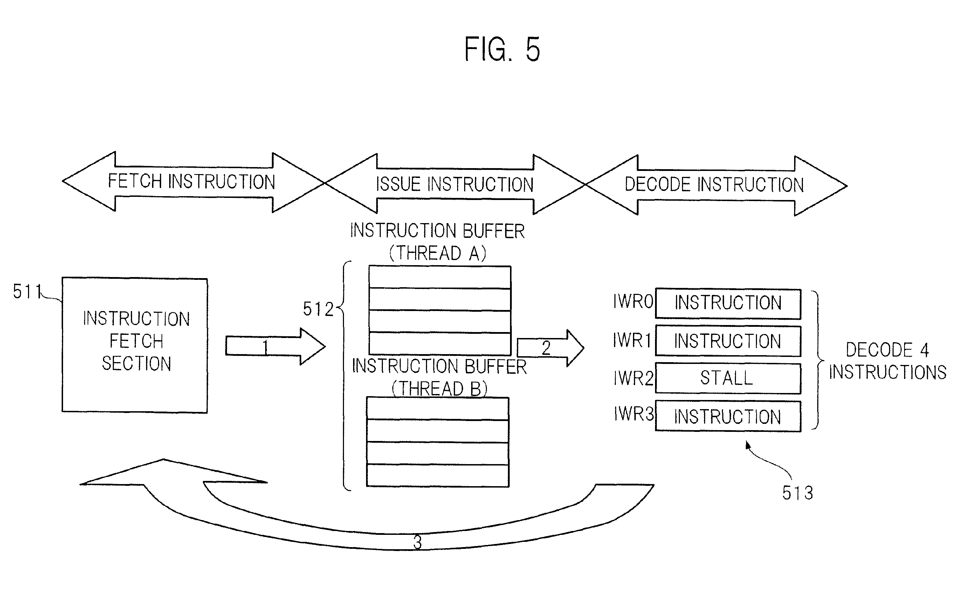

FIG. 5 is a conceptual diagram illustrating a technique in which if it is confirmed that an instruction is stalled with respect to a thread, the instruction is invalidated to allow a decode section available for another thread and the instruction will be restarted from fetch after stall is resolved.

In the example of FIG. 5, an instruction fetch section 511 fetches eight instructions each of two types of threads alternately into an instruction buffer 512. And the instruction buffer 512 inputs the four instructions each to a decode section 513. When decoded in the decode section 513, if one of the four instructions in a thread is confirmed to stall, the one instruction and a subsequent instruction thereof in the thread are invalidated in the decode section 513. As a result, the occupied state in the decode section 513 is resolved to make it possible to decode an instruction of another thread. In addition, the invalidated instructions of the thread are restarted from fetch by the instruction fetch section 511.

However, according to the technique disclosed in the Japanese Laid-open Patent Publication No. 2001-356903, an instruction confirmed to stall is to be restarted from fetch, which wastes once completed fetch and raises a problem that the efficiency of processing in the instruction control apparatus declines.

The present invention is made in consideration of the above-described circumstances, and an object thereof is to provide an instruction control apparatus and an instruction control method capable of processing instructions efficiently.

### Disclosure of Invention

According to a first aspect of the invention, an instruction control apparatus includes:
an instruction fetch section to obtain instructions from a thread including plural instructions;
an instruction buffer to hold the obtained instructions;
an instruction decode section to hold and decode instructions outputted from the instruction buffer;
an instruction execution section to execute the decoded instructions; and
an instruction input control section that, when the instructions held in the instruction buffer are inputted to the instruction decode section, if an instruction preceding to the instructions held in the instruction buffer is using the instruction execution section, invalidates the instructions held in the instruction decode section and an instruction subsequent to the instructions held in the instruction decode section and causes the instruction buffer to input again the instructions held in the instruction decode section and an instruction subsequent to the instructions held in the instruction decode section.

According to the instruction control apparatus of the present invention, when the instruction execution section is being used by a preceding instruction, an instruction following an instruction held in the instruction decode section is invalidated. Therefore, the instruction decode section is made available to another executable instruction. Further, the once invalidated instructions are held again in the instruction buffer, which is efficient since the work of obtaining the instructions from the thread is not wasted. That is, the instruction control apparatus of the present invention enables instructions to be processed efficiently.

In the instruction control apparatus of the present invention, it is preferable that the instruction fetch section obtains the instructions from the threads,
the instruction buffer holds the obtained instructions included in the threads,
the instruction decode section holds an instruction that belongs to one of the threads, and
the instruction input control section holds, if the instruction input control section inputs again, to the instruction decode section, an instruction that is caused to be held again in the instruction buffer and belongs to the thread and the instruction subsequent to the instructions held in the instruction buffer, an instruction that belongs to another thread different from the thread in the instruction decode section.

According to the instruction control apparatus of this preferable embodiment, at the time of processing instructions of plural threads, if an instruction of one thread is held again in the instruction buffer, the instruction decode section is made available to an instruction of another thread, thereby enabling efficientprocessing ofinstructionsofplural threads.

In the instruction control apparatus of this preferable embodiment in which instructions of plural threads are processed, it is further preferable that the instruction decode section holds the instructions targeted for the reissuing without requesting the instruction input control section of the inputting again, if the instruction input control section does not hold an instruction that belongs to another thread different from the thread.

According to the instruction control apparatus of this further preferable embodiment, when an instruction may be retained in the instruction decode section, in such cases where there is no other thread for which the instruction decode section should be available or there is no instruction to be processed of another thread, the instructions to be inputted again are held efficiently in the instruction decode section. Therefore, unnecessary re-input is prevented and instructions are processed more efficiently.

In the instruction control apparatus of the present invention, it is also preferable that the instruction input control section has information representing that the instruction targeted for the inputting again is executable, and if being requested of the inputting again from the instruction decode section, performs the inputting again based on the information.

According to the instruction control apparatus of this preferable embodiment, since it is noticed to the instruction input control section that instructions to be re-input are executable via the information, the instruction input control section may re-input the instructions in a suitable timing.

In the instruction control apparatus of the present invention, it is also preferable that the instruction input control section includes an instruction input buffer to hold the instructions to be inputted to the instruction decode section, and releases the instruction input buffer if all the instructions held in the instruction input buffer are decoded by the instruction decode section.

According to the instruction control apparatus of this preferable embodiment, since the instruction input buffer is adequately released, the instruction input buffer may be smoothly used repeatedly and thus it is possible to more efficiently process instructions.

In the instruction control apparatus of the present invention, it is also preferable that, if the instruction decode section determines that the decoded instructions are not yet ready with a condition in which the decoded instructions are to be executed, the instruction decode section requests the instruction input control section to input again the instruction subsequent to the instructions.

According to the instruction control apparatus of this preferable embodiment, since a determination about whether a condition where the instruction is executable is made in the instruction decode section in which instruction processing is surely grasped, a request of re-input is made to the instruction input control section without failure.

According to a second aspect of the invention, an instruction control method of an instruction control apparatus including an instruction buffer to hold instructions, an instruction decode section to hold and decode instructions outputted from the instruction buffer, and an instruction execution section to execute the decoded instructions, the instruction control method including:
determining, when the instructions held in the instruction buffer are inputted to the instruction decode section, whether or not an instruction preceding to the instructions held in the instruction buffer is using the instruction execution section;
invalidating, if an instruction preceding to the instructions held in the instruction buffer is using the instruction execution section, the instructions held in the instruction decode section and an instruction subsequent to the instructions held in the instruction decode section; and
causing the instruction buffer to input again the instructions held in the instruction decode section and an instruction subsequent to the instructions held in the instruction decode section.

According to the instruction control method of the present invention, it is possible to process an instruction efficiently in a similar manner to the above-described instruction control apparatus.

According to the present invention, it is possible to obtain an instruction control apparatus and an instruction control method that are capable of processing an instruction efficiently.

### Brief Description of Drawings

FIG. 1 is a conceptual diagram illustrating out-of-order execution in superscalar.
FIG. 2 is a conceptual diagram illustrating one example of a SMT function.
FIG. 3 is another conceptual diagram, different from FIG. 2 illustrating one example of the SMT function.
FIG. 4 is a conceptual diagram illustrating a state in which stall occurs in an instruction decode section in an instruction control apparatus of single-threading type.
FIG. 5 is a conceptual diagram illustrating a technique in which if it is confirmed that an instruction is stalled with respect to a thread, the instruction is invalidated to allow a decode section available for another thread and the instruction will be restarted from fetch after stall is resolved.
FIG. 6 is a hardware schematic diagram of a CPU 10 that is one embodiment of an instruction control apparatus.
FIG. 7 is a conceptual diagram illustrating processing related to a stall instruction in the CPU 10 of FIG. 6.
FIG. 8 is a diagram of the CPU 10 partially simplified and partially illustrated in functional blocks, to explain processing related to a stall instruction.
FIG. 9 is a conceptual diagram illustrating a flow of processing from fetching instructions until the instructions are inputted to a decode section 109.
FIG. 10 is a diagram of buffer information associated with each IBR 104a.
FIG. 11 is an explanatory diagram to explain presentation performed in a CPU of single-threading type.
FIG. 12 is an explanatory diagram to explain presentation performed in the CPU 10 of the present embodiment.
FIG. 13 is a conceptual diagram illustrating a flow of processing if stall is confirmed in the decode section 109.
FIG. 14 is a diagram illustrating a flow of processing if stall is confirmed in the decode section 109 as the transition of instructions stored in IWR 109a.
FIG. 15 is a diagram illustrating a D-reverse designation circuit.
FIG. 16 is a conceptual diagram illustrating a flow of control of each pointer in the CPU 10, when D-reverse is executed.
FIG. 17 is a diagram illustrating the generation of contents in a storage pointer 253 in a table form with the use of concrete numerical values.
FIG. 18 is a flowchart illustrating a flow of processing from the occurrence of stall until re-presentation and decoding are performed.
FIG. 19 is a diagram illustrating an absence detection circuit.
FIG. 20 is a flowchart illustrating processing from the occurrence of stall through monitoring of a stall factor to execution of re-presentation.
FIG. 21 is a diagram for explaining release of an IBR 109a when four instructions to be D-released by decoding in one time spread across two IBRS 109a.
FIG. 22 is a conceptual diagram illustrating how a register is updated by in-order execution in a CSE 127.
FIG. 23 is a diagram for explaining a state in which another effect different from efficiency improvement in instruction processing is obtained.
FIG. 24 is a diagram for explaining another effect of improving throughput.

### Best Mode for Carrying Out the Invention

Hereinafter, an embodiment of the instruction control apparatus will be described with reference to drawings.

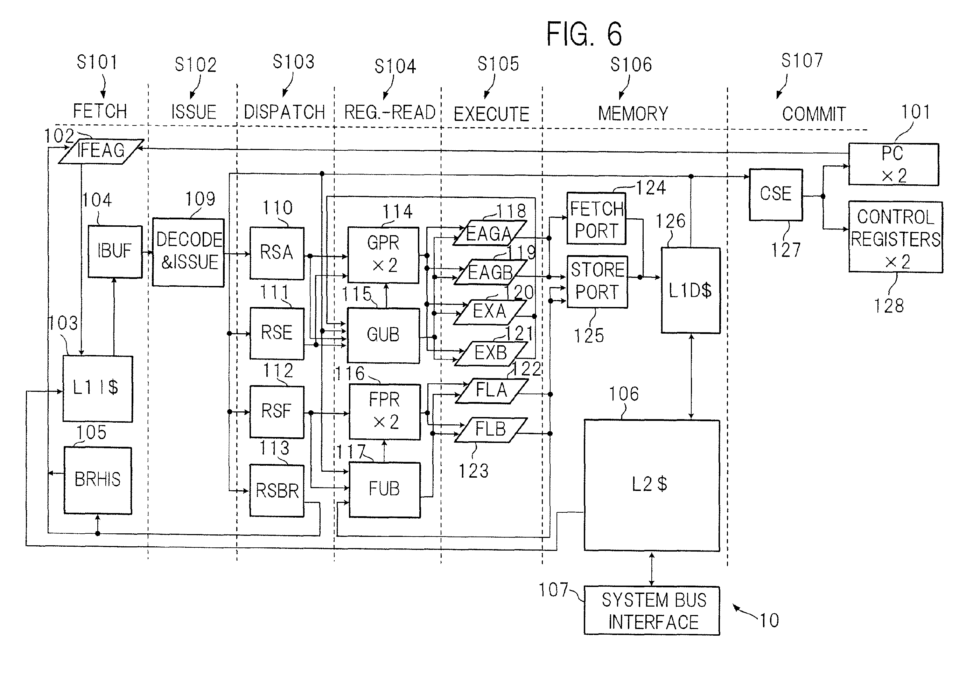

FIG. 6 is a hardware schematic diagram of a CPU 10 that is one embodiment of an instruction control apparatus.

The CPU 10 illustrated in FIG. 6 is an instruction control apparatus with the SMT function of processing instructions of two types of threads simultaneously. The CPU 10 sequentially performs processing of the following seven stages. Namely, fetch stage in which instructions of two types of threads are alternately fetched by in-order execution (step S101); decode stage in which processing represented by the fetched instruction is decoded by in-order execution (step S102); dispatch stage in which the decoded instruction is stored, by in-order execution, into an after-mentioned reservation station connected to a computing unit necessary for execution of processing of the instruction, and the stored instruction is delivered to the computing unit by out-of-order execution (step S103); register read stage in which an operand necessary for execution of the instruction stored in the reservation station is read from a register by out-of-order execution (step S104); execution stage in which the instruction stored in the reservation station is executed with the use of the operand read from the register by out-of-order execution (step S105); memory stage in which recording an execution result in a memory outside the CPU 10 by out-of-order execution (step S106); and commit stage in which a register or the like for storing an operand is updated in accordance with the execution result and the execution result is caused to be visible from a program by in-order execution (step S107). The processing in these seven stages is sequentially executed.

Hereafter, each stage will be explained in detail.

In the fetch stage (step S101), each two program counters 101 provided for two types of threads (thread 0, thread 1), respectively, gives a command of fetching how-manieth (a position of sequence in an order) instruction in a description order in each thread. And in a timing at which each of the counters 101 gives the command of fetching an instruction, an instruction fetch section 102 fetches a designated instruction from an instruction primary cache 103 into an instruction buffer 104. The two program counters 101 alternately operate and in fetch of one time, either one of the program counters 101 gives a command to fetch an instruction of a corresponding thread. In this embodiment, in fetch of one time, eight instructions are fetched in a processing order in a thread by in-order execution. Here, there is a case in which the processing order by in-order execution may branch from an instruction description in the thread. The CPU 10 is provided with a branch prediction section 105 for predicting presence or absence of branch and a branch destination in the thread as well. The instruction fetch section 102 fetches an instruction by referring to a predicted result of the branch prediction section 105.

A program to be executed by the CPU 10 of the present embodiment is stored in an external memory (not illustrated). The CPU 10 is connected to the external memory or the like via a system bus interface 107 that is incorporated in the CPU 10 and connected to a secondary cache 106. When the program counters 101 give a command to fetch an instruction, the instruction fetch section 102 refers to a predicted result of the branch prediction section 105 and requests the instruction primary cache 103 of eight instructions. Then, the requested eight instructions are inputted from the external memory via the system bus interface 107 and the secondary cache 106 into the instruction primary cache 103, and the instruction primary cache 103 delivers these instructions to the instruction buffer 104.

In the decode stage (step S102), the instruction buffer 104 inputs four instructions out of the eight instructions that are fetched and held by the instruction fetch section 102 to a decode section 109 by in-order execution. The decode section 109 decodes the four inputted instructions by in-order execution. In decoding, a number of from "0" to "63" is assigned to each of the instructions as Instruction IDentification (IID) in order of decoding in each of the threads. In this embodiment, when an instruction in the thread 0 is decoded, an IID of from "0" to "31" is assigned to it, whereas when an instruction in the thread 1 is decoded, an IID of from "32" to "63" is assigned to it. The decode section 109 sets an IID allocated to an instruction to be decoded to a vacant entry in a entry group to which the instruction to be decoded belongs, of an after-mentioned Commit Stack Entry (CSE) 127. The CSE 127 contains 64 entries in all, 32 entries for the thread 0 and 32 entries for the thread 1.

The decode section 109 determines a computing unit necessary to execute processing of each instruction, for each of the decoded four instructions to each of which the IID is assigned. Each of the decoded instructions is stored into a reservation station connected to a computing unit necessary to execute processing of the instruction by in-order execution.

The reservation station holds plural decoded instructions and in the dispatch stage (step S103), delivers each instruction to a computing unit by out-of-order execution. That is, the reservation station delivers an instruction in which an operand and a computing unit necessary to execute processing have secured for it to a computing unit, regardless of a processing order in a thread. If there are plural instructions ready to be delivered, one having been decoded first among them is delivered first to a computing unit. The CPU 10 of this embodiment contains four types of reservation stations. They are a reservation station for generating address (RSA: Reservation Station for Address generation) 110, a reservation station for integer calculation (RSE: Reservation Station for fix point Execution) 111, a reservation station for floating-point calculation (RSF: Reservation Station for Floating point) 112, and a reservation station for branch (RSBR: Reservation Station for BRanch) 113. Each of the RSA 110, RSE 111, and RSF 112 is connected to its corresponding computing unit via a register for storing an operand. In contrast to this, the RSBR 113 is connected to the branch prediction section 105 and is responsible for giving a command of waiting for a confirmation of a predicted result by the branch prediction section 105, of re-fetching an instruction when prediction is failed and the like.

In the register reading stage (step S104), an operand in the registers is read by out-of-order execution. That is, an operand in a register connected to a reservation station having delivered an instruction is read and delivered to a corresponding computing unit, regardless of a processing order in a thread. The CPU 10 contains two types of registers, an integer register (GPR: General Purpose Register) 114 and a floating-point register (FPR: Floating Point Register) 116. Both of the GPR 114 and FPR 116 are registers visible to a program and provided for each of the thread 0 and the thread 1. To the GPR 114 and FPR 116, buffers are connected, respectively, to hold an execution result of an instruction until when the respective registers are updated. An integer register update buffer (GUB: GPR Update Buffer) 115 is connected to the GPR 114. A floating-point register update buffer (FPR: FPR Update Buffer) 116 is connected to the FPR 116.

Since address generation and integer calculation are performed with the use of an integer operand, the GPR 114 is connected to the RSA 110 and the RSE 111. Further in this embodiment, since integer calculation using an operand held in the GUB 115 in a stage before updating the GPR 114 is allowed, the GUB 115 is also connected to the RSA 110 and the RSE 111. Furthermore, since floating-point execution is performed with the use of a floating-point operand, the FPR 116 is connected to the RSF 112. Moreover, in this embodiment, since floating-point calculation using an operand held in the FUB 117 is allowed, the FUB 117 is also connected to the RSF 112.

The CPU 10 of the present embodiment further includes: two address generation units, Effective Address Generation unit A (EAGA) 118 and B (EAGB) 119; two integer EXecution unit A (EXA) 120 and B (EXB) 121; and two FLoating-point execution unit A (FLA) 122 and B (FLB) 123. The GPR 114 and the GUB 115 are connected to the EAGA 118, the EAGB 119, the EXA 120, and the EXB 121, which use an integer operand. The FPR 116 and the FUB 117 are connected to the FLA 122 and the FLB 123 that use a floating-point operand.

In the execution stage (step S105), a computing unit executes an instruction by out-of-order execution. That is, among the multiple types of computing units, a computing unit where an instruction is delivered from a reservation station and an operand necessary for execution is delivered from a register executes processing of the delivered instruction with the use of the delivered operand, regardless of a processing order in the thread. Additionally, in the execution stage (step S105), while one computing unit is in execution, if an instruction and an operand are delivered to other computing unit, the one and the other computing units execute processing simultaneously in parallel.

In the execution stage (step S105), when an instruction of address generation processing is delivered from the RSA 110 to the EAGA 118 and an integer operand is delivered from the GPR 114, the EAGA 118 executes address generation processing with the use of the integer operand. Also, when an instruction of integer calculation processing is delivered from the RSE 111 to the EXA 120 and an integer operand is delivered from the GPR 114, the EXA 120 executes the integer calculation processing with the use of the integer operand. When an instruction of floating point calculation processing is delivered from the RSF 112 to the FLA 122 and a floating point operand is delivered from the FPR 116, the FLA 122 executes floating point calculation processing with the use of the floating point operand.

Since execution results of the EAGA 118 and the EAGB 119 are used to access an external memory via the system bus interface 107, those computing units are connected to a fetch port 124 that is a read port of information from the external memory and to a store port 125 that is a write port to the external memory. Execution results of the EXA 120 and the EXB 121 are connected to a transit buffer GUB 115 for updating the GPR 114, and further connected to the store port 125 serving as an intermediate buffer for updating the memory. Execution results of the FLA 122 and the FLB 123 are connected to an intermediate buffer FUB 117 for updating the FPR 116, and further connected to the store port 125 serving as an intermediate buffer for updating the memory.

In the memory stage (step S106), an access to the external memory such as recording of an execution result into the external memory is performed by out-of-order execution. Namely, if there are plural instructions of processing requiring such an access, an access is made in an order in which an execution result is obtained, regardless of a processing order in a thread. In the memory stage (step S106), an access is made by the fetch port 124 and the store port 125 through a data primary cache 126, the secondary cache 106, and the system bus interface 107. Additionally, when the access to the external memory completes, an execution completion notification is sent from the fetch port 124 and the store port 125 to the CSE 127 via a connection line (not illustrated).

The EXA 120, the EXB 121, the FLA 122, and the FLB 123 are connected to the CSE 127 with a connection cable that is not illustrated for the sake of simplicity. If processing executed by each computing unit is completed when the respective computing unit finishes execution, without requiring access to the external memory, an execution completion notification is sent from each of the computing units to the CSE 127 when the execution is completed.

In the commit stage (step S107), the CSE 127 updates, in the following manner by in-order execution, a control register 128 for holding an operand used for another processing other than the above-described processing in the GPR 114, the FPR 116, the program counters 101, and the CPU 10. An execution completion notification sent from the computing units or the like to the CSE 127 describes an IID of an instruction corresponding to the execution completion notification, and information (commit information) necessary for committing an execution result, such as a register targeted for updating after the instruction is completed. When the execution completion notification is sent, the CSE 127 stores the commit information described in the execution completion notification in an entry set with a same IID as the IID described in the execution completion notification, among the sixty-four entries contained in the CSE 127. And the CSE 127 updates a register in accordance with the commit information corresponding to the instruction already stored, by in-order execution according to processing order in the threads. When this commit is completed, the instruction corresponding to the commit, which have been held in the reservation station is deleted.

Roughly speaking, the CPU 10 has a structure like the above and operates along the seven stages as explained.

Incidentally, among the decoded instructions, there is an instruction that is prohibited from being executed simultaneously with another preceding instruction in the same thread, or an instruction that stalls (stall instruction) without being executed immediately due to no available space in resources required to execute the instruction. The characteristic of the present embodiment in the CPU 10 lies in this processing related to such a stall instruction. Hereinafter, explanation will be made with a focus on this point.

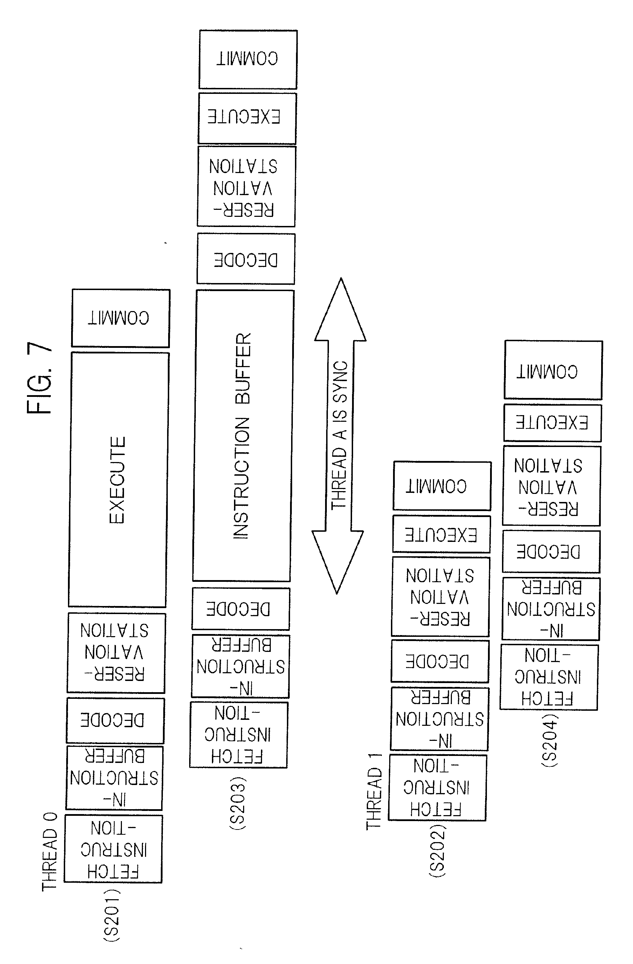

FIG. 7 is a conceptual diagram illustrating processing related to a stall instruction in the CPU 10 of FIG. 6.

In the example of FIG. 7, in from step S201 to step S204, instructions belonging to the thread 0, and instructions belonging to the thread 1 are alternately decoded by four for each thread. In the example of FIG. 7, either one of the four instructions in the thread 0 processed in step S203 is a stall instruction. In the CPU 10 of the present embodiment, an instruction subsequent to the stall instruction is held in the instruction buffer 104 after decoding, as illustrated in FIG. 7, until commit of the preceding instruction processed in step S201 is completed and a required operand is obtained and a condition where the instruction may be executed is ready. When the condition is ready, the instruction subsequent to the stall instruction inclusive is started again from decoding.

The CPU 10 of the present embodiment includes only one decode section 109 having a complicated structure and large-scaled circuit, as illustrated in FIG. 6, and the CPU 10 has such a structure that the decode section 109 is commonly used between the two types of threads.

In the present embodiment, even if an instruction in one thread is a stall instruction, since an instruction subsequent to the stall instruction is held in the instruction buffer 104 until an executable condition is ready, and so the decode section 109 is released from the one thread to which the stall instruction belongs, making the decode section 109 available for the other thread. By this, as illustrated in FIG. 7, even if processing in the thread 0 is sustained, an instruction in the thread 1 is processed smoothly.

Hereafter, processing related to the stall instruction will be explained in detail, although the explanation will partially overlap the explanation of FIG. 6.

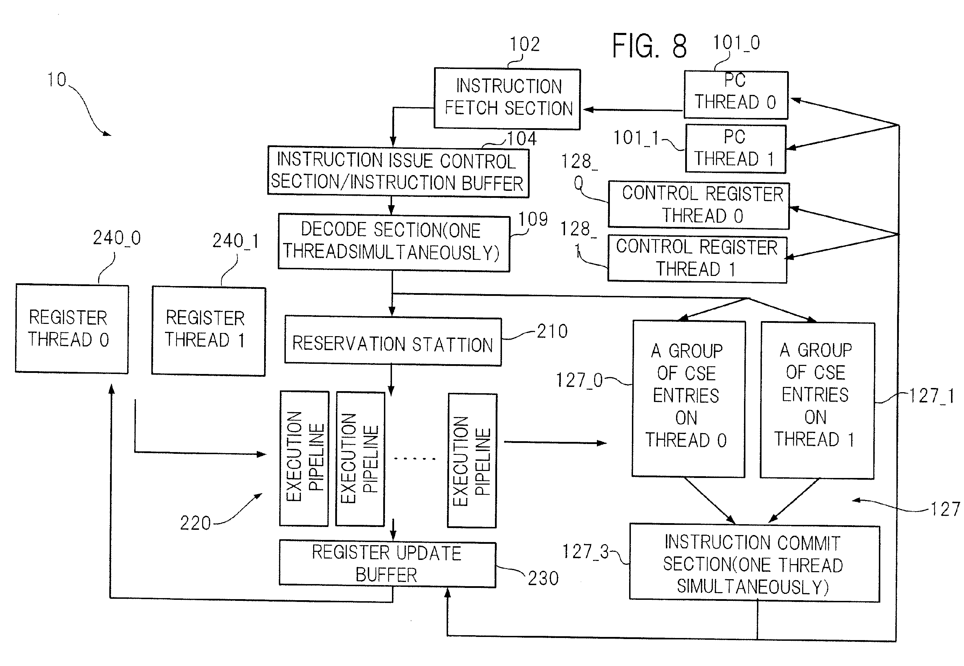

FIG. 8 is a diagram of the CPU 10 partially simplified and partially illustrated in functional blocks, to explain the processing related to the stall instruction.

In this FIG. 8, elements each separately corresponding to each one of the blocks of FIG. 6 are illustrated with the same numerals as in FIG. 6.

The CPU 10 contains two program counters: a program counter 101_0 for thread 0 and a program counter 101_1 for thread 1, and a command of executing instruction fetch is alternately given from these two program counters.

The instruction fetch section 102 fetches an instruction into the instruction buffer 109 via the instruction primary cache 103 of FIG. 6, in accordance with a command from the two program counters.

The instruction buffer 104 holds the fetched instruction and inputs the held instruction into the decode section 109. The decode section 109 decodes the inputted instruction and further, confirms whether or not an executable condition is ready for the decoded instruction, i.e., confirms whether or not the instruction stalls.

The decode section 109 delivers an instruction whose condition is ready to a reservation station 210 in a downstream stage, whereas invalidates an instruction subsequent to the stall instruction whose condition is not ready. By this, the decode section 109 is released and new decoding is made possible. Further in the present embodiment, as to the invalidated instruction, a request of re-input is made from the decode section 109 to the instruction buffer 109, after a stall factor is resolved. In the example of FIG. 8, the four types of reservation stations illustrated in FIG. 6 are simplified and illustrated in one box.

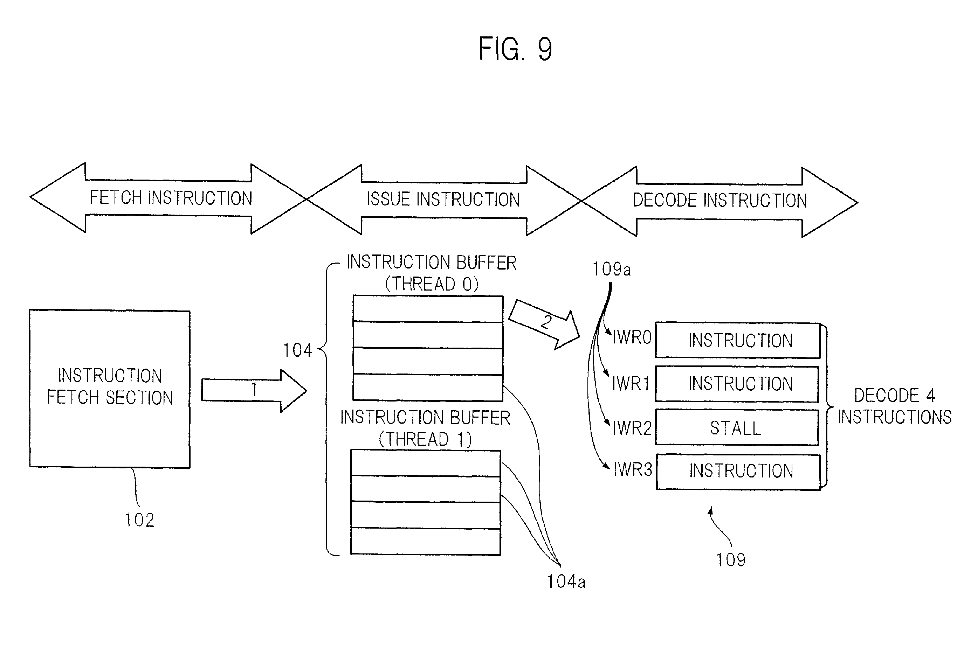

FIG. 9 is a conceptual diagram illustrating a flow of processing from fetching instructions until the instructions are inputted to the decode section 109.

In this embodiment, instructions of two types of threads are fetched alternately by eight for each thread into the instruction buffer 104 by the instruction fetch section 102 and inputted t by four to the decode section 109 by the instruction buffer 104. The decode section 109 stores the instructions into four registers IWR 109a, respectively, from the zeroth to the third stages contained in the decode section 109. Additionally, the storing into the IWR 109a is performed sequentially from the IWR 109a at the zeroth stage. Here, the inputting of instruction from the instruction buffer 104 to the four IWR 109a in the decode section 109 is called presentation.

Hereafter, processing from fetching by the instruction fetch section 102 topresentationby the instruction buffer 104 will be explained further in detail.

In this embodiment, the instruction buffer 104 contains IBR 104a of eight stages from the zeroth to seventh stages. Each IBR 104a may store eight instructions. In each time of fetch, eight instructions are stored into the IBR 104a at the zeroth to seventh stages in an order defined by buffer information such as the following.

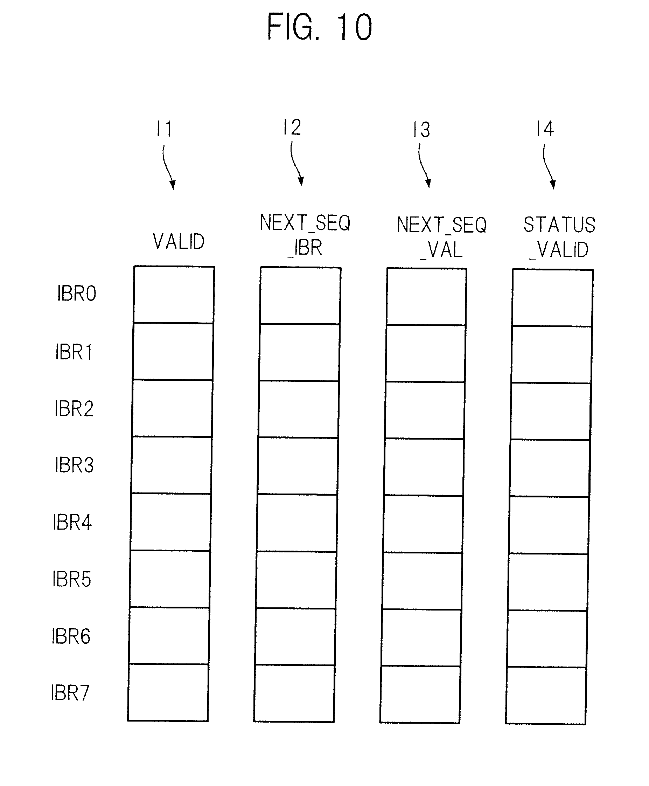

FIG. 10 is a diagram of buffer information associated with each IBR 104a.

As illustrated in FIG. 10, pieces of information associated to the IBR 104a are: VALID information I1 indicating whether or not the IBR 104a is assigned as a current storage destination of an instruction; NEXT_SEQ_IBR information I2 indicating a number of stages of the IBR 104a to be assigned as a storage destination of an instruction in the next fetch; NEXT_SEQ_VALID information I3 indicating whether or not an instruction to be fetched next is requested from the instruction fetch section 102 for the instruction primary cache 103; and STATUS_VALID information I4 indicating whether or not a currently stored instruction is a result of the latest fetch performed to the IBR 104a.

The fetched eight instructions are stored into the respective IBRS 104a indicated by the VALID information I1 as respective storage destinations each allocated for each of instructions, indicated as such in. After storing, the STATUS_VALID information I4 of the IBR 104a is updated to indicate that the currently stored instruction is a result of the latest fetch executed for the IBR 104a. When the fetch of a next instruction is issued, its IBR number is stored into one IBR 104a of a stage number indicated by the NEXT_SEQ_IBR information I2, and then the VALID information I1 in the one IBR 104a is updated.

Of the four pieces of information described above, especially by the VALID information I1, the NEXT_SEQ_IBR information I2, and the NEXT_SEQ_VALID information I3, a storing order of the instructions into the IBR 104a for eight stages is defined. Further, by the STATUS_VALID information I4, it is confirmed that the currently stored instruction is the latest information for the IBR 104a.

Next, explanation will be made about presentation.

Although the CPU 10 of the present embodiment is an instruction control apparatus including the SMT function for processing instructions of two types of threads simultaneously; hereafter, for the sake of simplifying explanation, presentation will be explained about a single-threading type CPU for processing an instruction of one type of thread.

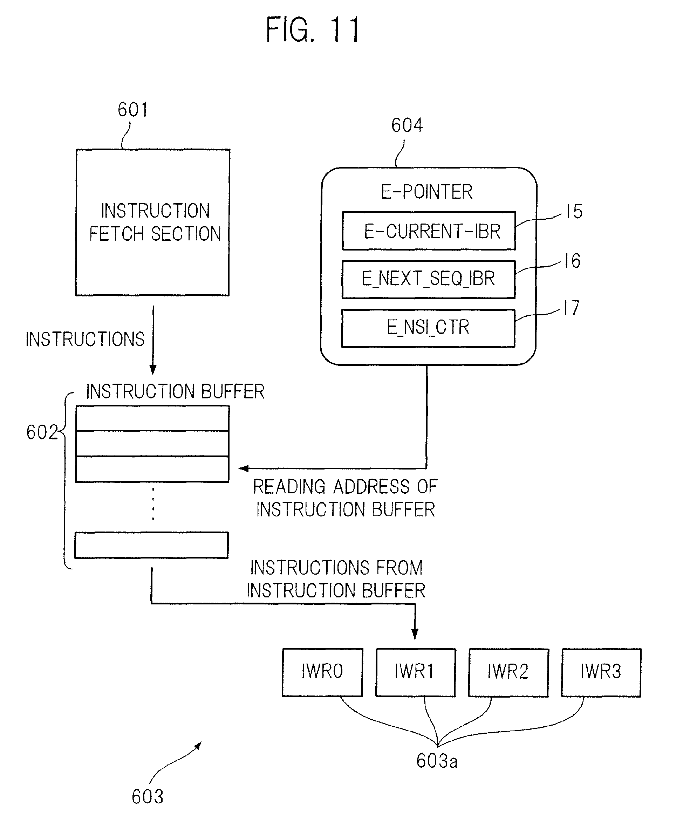

FIG. 11 is an explanatory diagram to explain presentation performed in a CPU of single-threading type.

Presentation is performed from an instruction buffer 602 to four IWR603a of a decode section 603 in a processing order of a program, i.e., in an order in which an instruction is fetched by an instruction fetch section 601. To enable such sequential presentation, a pointer 604 illustrated in FIG. 11 is used.

The pointer 604 contains descriptions of three pieces of information such as the following.

They are: E_CURRENT_IBR information I5 indicating a stage number of the IBR 104a from which an instruction targeted for current presentation is taken out firstly; E_NEXT_SEQ_IBR information I6 indicating a stage number of the IBR 104a from which an instruction is taken out subsequently; and E_NSI_CTR (E Next Sequential Instruction Counter) information I7 indicating how-manieth an instruction at the top position of the four instructions that are targeted for the current presentation is among the eight instructions queuing in the IBR in an order of being fetched.

The instruction buffer 602 refers to the pointer 604 at the time of presentation, and stores four instructions counting from the instruction indicated by the E_NSI_CTR information I7 out of the eight instructions in the IBR 104a at the stage number indicated by the E_CURRENT_IBR information I5, into the four IWR603a from the zeroth to the third stages sequentially, starting from the IWR603a at the zeroth stage.

When the eight instructions in the IBR 104a at the stage number indicated by the E_CURRENT_IBR information I5 are completely stored in the IWR603a, contents of the E_CURRENT_1BR information I5 are updated to contents of the E_NEXT_SEQ_IBR information I6, and "4" is added to the number indicated by the E_NSI_CTR information I7. Furthermore, the contents of the E_NEXT_SEQ_IBR information I6 are updated to a stage number of the IBR 104a from which an instruction is fetched subsequently to the IBR 104a at the stage number indicated by the updated E_CURRENT_IBR information I5.

By presentation referring to the pointer 604, the instruction buffer 602 is capable of taking out four instructions in an order of fetch and sequentially store them into the four IWR603a.

Next, explanation will be made about presentation performed in the CPU 10 of the present embodiment, including the SMT function for processing instructions of two types of threads simultaneously.

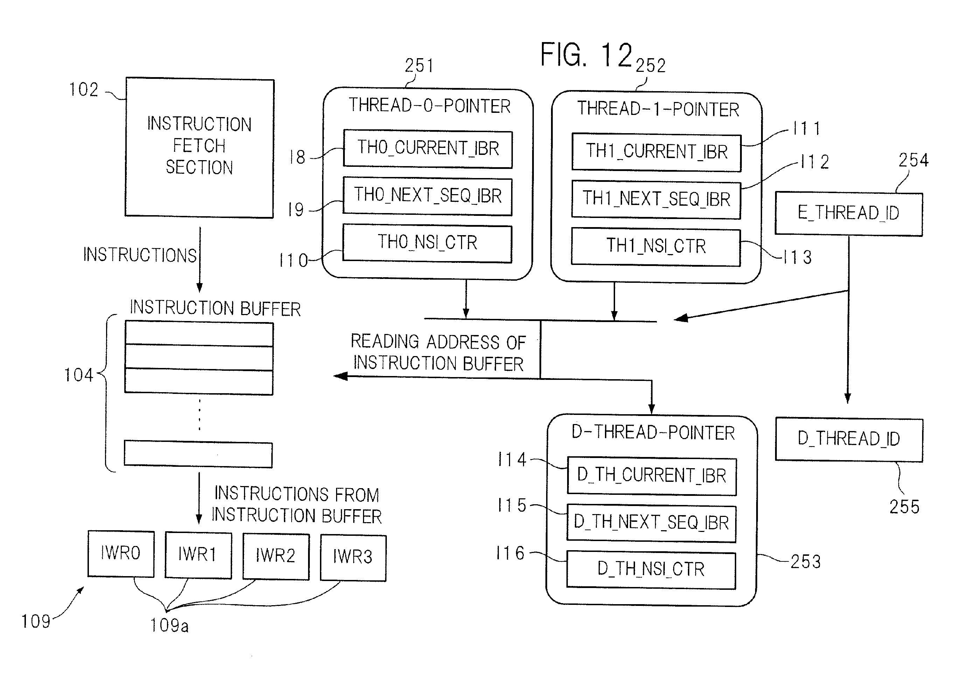

FIG. 12 is an explanatory diagram to explain presentation performed in the CPU 10 of the present embodiment.

As illustrated in FIG. 12, pointers equivalent to the pointer 604 in FIG. Il are provided for two types of threads, respectively. They are a thread-0-pointer 251 and a thread-1-pointer 252. In this embodiment, there is also provided a storage pointer 253 to store a pointer referred to take out a current instruction, to be used for after-mentioned re-presentation.

The thread-0-pointer 251 contains descriptions of three pieces of information. They are: THO_CURRENT_IBR information I8 indicating a stage number of the IBR 104a from which an instruction in the thread 0 is taken out first; THO_NEXT_SEQ_IBR information 19 indicating a stage number of the IBR 104a from which an instruction in the thread 0 is taken out subsequently; and THO_NSI_CTR information I10 indicating how-manieth an instruction at the top position in the thread 0 to be taken out this time is.

Also, the thread-1-pointer 252 contains descriptions of three pieces of information. They are: TH1_CURRENT_IBR information I11 indicating a stage number of the IBR 104a from which an instruction in the thread 1 is taken out first; TH1_NEXT_SEQ_IBR information I12 indicating a stage number of the IBR 104a from which an instruction in the thread 1 is taken out subsequently; and TH1_NSI_CTR information I13 indicating how-manieth an instruction at the top position in the thread 1 to be taken out this time is.

Further, the storage pointer 253 contains descriptions of three pieces of information. They are: D_TH_CURRENT_IBR information I14 indicating a stage number of the IBR 104a from which the instruction at the top has been taken out; D_TH_NEXT_SEQ_IBR information I15 formally indicating a stage number of the IBR from which an instruction is taken out subsequently; and D_TH_NSI_CTR information I16 indicating how-manieth the taken-out instruction at the top position is.

Furthermore in the present embodiment, there is provided a target thread designating section 254 into which a thread number targeted for current presentation is stored, out of the two types of threads: the thread 0 and the thread 1. In addition, there is also provided a re-presentation target thread designating section 255 into which a thread number targeted for after-mentioned re-presentation is stored.

At the time of presentation, firstly, of the two pointers, a pointer whose thread number is stored in the target thread designating section 254 is selected. Also, the number currently stored in the target thread designating section 254 is copied to the re-presentation target thread designating section 255, and the above-described three pieces of information in the selected pointer are copied as three pieces of information in the storage pointer 253.

Next, the instruction buffer 104 refers to the selected pointer and sequentially stores four instructions including the instruction indicated by information in the pointer, among the eight instructions in the IBR at the stage number indicated by the information in the pointer, into the four IWR603a at the zeroth stage to the third stage, starting from the IWR603a at the zeroth stage. After presentation, the three pieces of information in the pointer are updated accordingly.

Operations of the re-presentation target thread designating section 255 and the storage pointer 253 at the time of re-presentation will be described later.

By presentation referring to the pointers corresponding to the threads, the instruction buffer 104 is capable of taking out four instructions in an order of fetch and sequentially store them into the four IWR 109a.

In this way, when the instructions are stored into the four IWR 109a of the decode section 109, it is confirmed whether or not each of the decoded instructions stalls because an executable condition is not ready. The decode section 109 delivers a valid instruction where the condition is ready and so the instruction does not stall, to the reservation station 210 in a downstream stage, whereas invalidates an instruction subsequent to a stall instruction where the condition is not ready.

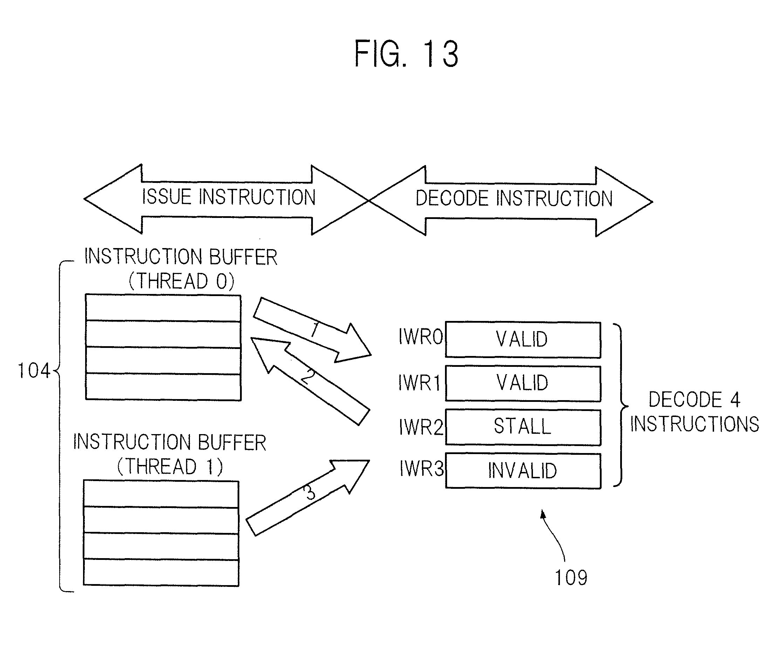

FIG. 13 is a conceptual diagram illustrating a flow of processing in the event of confirming stall in the decode section 109.

In the example of FIG. 13, presentation is performed with respect to the thread 0 from the instruction buffer 104, and four instructions in the thread 0 are stored into the four IWR 109a of the decode section 109. After decoding, it is confirmed that an instruction in the IWR 109a at the second stage stalls, and the instruction confirmed to stall and a following instruction in the IWR 109a at the third stage is invalidated.

As to the invalidated instruction, when it is confirmed that the instruction stalls, a request of re-presentation is sent to the instruction buffer 104 after its stall factor is resolved. Hereafter, requesting of re-presentation after a stall factor is resolved is called D-reverse.

On the other hand, the valid instruction in the IWR 109a at the zeroth and first stages, which is not confirmed to stall, is delivered to the reservation station 210. Hereafter delivering a valid instruction to the reservation station 210 is called D-release.

In this embodiment, if it is confirmed in the decode section 109 that stall occurs, the instruction confirmed to stall (stall instruction) and a subsequent instruction are invalidated, the above-described D-release is performed, and thus the decode section 109 is released. And the released decode section 109 is continuously used to decode an instruction in another thread (thread 1 in the example of FIG. 13) that is different from a thread to which the stall instruction belongs (thread 0 in the example of FIG. 13).

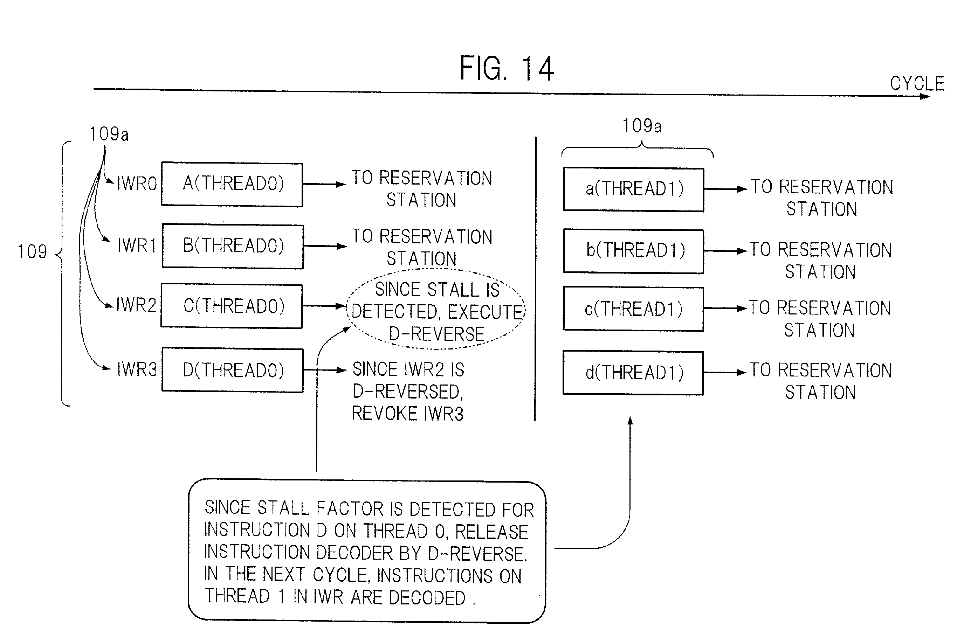

FIG. 14 is a diagram illustrating a flow of processing in the event of confirming stall in the decode section 109 as a transition of instructions stored in the IWR 109a.

In the example of FIG. 14, while presentation for the thread 0 is performed in a certain cycle, an instruction C in the IWR 109a at the second stage stalls and D-reverse is performed to the instruction buffer 104. As a result, in this cycle, the instruction C in the IWR 109a at the second stage and a following instruction D in the IWR 109a at the third stage are invalidated. At the same time, since an instruction A in the IWR 109a at the zeroth stage and an instruction B in the IWR 109a at the first stage are valid instructions, these instructions are D-released and delivered to the reservation station 210. By this invalidating and D-release, the decode section 109 is released in this cycle.

In the following cycle, for the released decode section 109, presentation with respect to the thread 1 is performed. The four instructions a, b, c, and d in the thread 1, which are presented to the decode section 109 in this cycle are all valid instructions. Therefore all the four instructions are D-released and delivered to the reservation station 210.

In this manner, in the present embodiment, if an instruction in one thread is confirmed to stall in the decode section 109, the decode section 109 is released by the above-described invalidating and D-release and made available to another thread. This enables the CPU 10 to process instructions in two types of threads efficiently and smoothly.

Incidentally, stall in the decode section 109 may occur inmultiple instructions in a same thread. In this regard, in the present embodiment, since an instruction after a stall instruction is all invalidated, even if stall occurs inmultiple instructions, it is only necessary to perform D-reverse to an instruction in the IWR 109a whose stage number is the lowest among the multiple instructions. As such, in the present embodiment, the decode section 109 is provided with a D-reverse designation circuit for designating execution of D-reverse to an instruction in the IWR 109a whose stage number is the lowest.

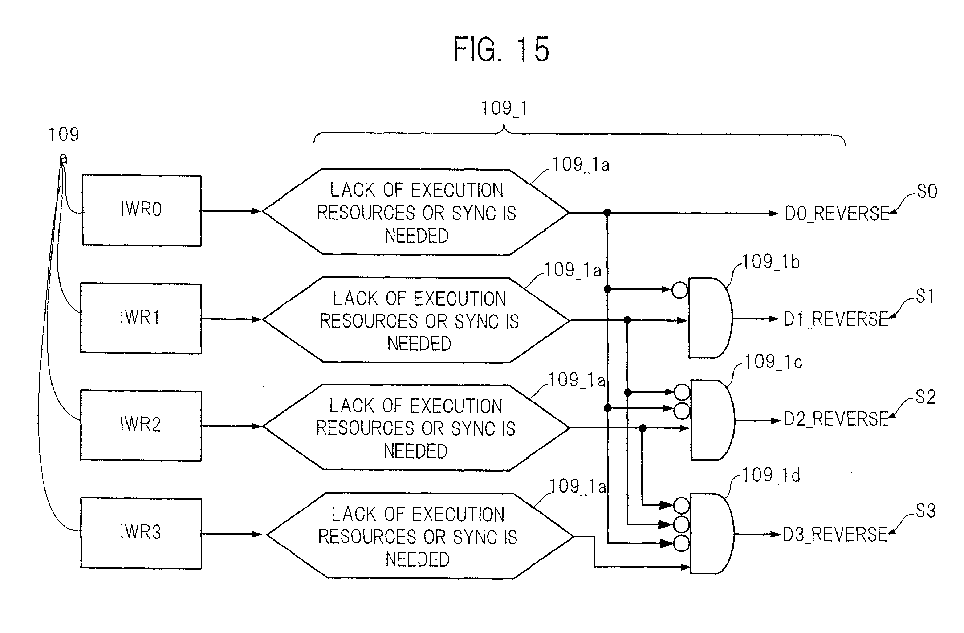

FIG. 15 is a diagram illustrating a D-reverse designation circuit.

A D-reverse designation circuit 109_1 illustrated in FIG. 15 contains four stall detection circuits 109_1a, each of which is connected to the IWR 109a, for detecting occurrence of stall in a presen ted instruction . Each of the stall detection circuits 109_1a checks an instruction in its corresponding IWR 109a for the presence of a stall factor such as that an execution resource lacks or the instruction is of sync attribute where simultaneous execution with another preceding instruction in a same thread is prohibited, and outputs "1" when the presence of a stall factor is confirmed.

It is noted that although a situation where an execution resource shared between different threads lacks becomes a stall factor, D-reverse designation is not designated in this situation. This is because if D-reverse is performed when a shared execution resource lacks, then when an instruction in another thread is decoded after D-reverse, the exact shared resource is released and used, possibly leading to repeated D-reverse by the same thread due to lack of a shared resource in a following cycle.

Further, the D-reverse designation circuit 109_1 illustrated in FIG. 15 contains a first operator 109_1b to output "1" when the stall detection circuit 109_1a connected to the IWR 109a at the first stage is connected to the IWR 109a whose stage number is the lowest among the detection circuits in which a stall factor is present. Moreover, the D-reverse designation circuit 109_1 contains a second operator 109_1c to output "1" when the stall detection circuit 109_1a connected to the IWR 109a at the second stage is connected to the IWR 109a whose stage number is the lowest among the detection circuits in which a stall factor is present, and a third operator 109_1d to output "1" when the stall detection circuit 109_1a connected to the IWR 109a at the third stage is connected to the IWR 109a whose stage number is the lowest among the detection circuits in which a stall factor is present.

By the D-reverse designation circuit 109_1, among instructions with a stall factor, if an instruction in the IWR 109a whose stage number is the lowest is an instruction in the IWR 109a at the zeroth stage, "1" is outputted only from the stall detection circuit 109_1a connected to the IWR 109a at the zeroth stage. This "1" is outputted as a D0_REVERSE signal S0 for designating execution of D-reverse for the instruction in the IWR 109a at the zeroth stage, to a signal line for the D0_REVERSE signal S0. Also, if an instruction in the IWR 109a whose stage number is the lowest is an instruction in the IWR 109a at the first stage, "1" that is outputted only from the first operator 109_1b is outputted as a D1_REVERSE signal S1 for designating execution of D-reverse for the instruction in the IWR 109a at the first stage, to a signal line for the D1_REVERSE signal S1. In addition, if an instruction in the IWR 109a whose stage number is the lowest is an instruction in the IWR 109a at the second stage, "1" that is outputted only from the second operator 109_1c is outputted as a D2_REVERSE signal S2 for designating execution of D-reverse for the instruction in the IWR 109a at the second stage, to a signal line for the D2_REVERSE signal S2. Moreover, if an instruction in the IWR 109a whose stage number is the lowest is an instruction in the IWR 109a at the third stage, "1" that is outputted only from the third operator 109_1c is outputted as a D3_REVERSE signal S3 for designating execution of D-reverse for the instruction in the IWR 109a at the third stage, to a signal line for the D3_REVERSE signal S3.

In this embodiment, when multiple instructions are confirmed to stall by the D-reverse designation circuit 109_1, execution of D-reverse is designated with respect to an instruction in the IWR 109a whose stage number is the lowest.

Next, explanation will be made about control of each pointer in the CPU 10 when D-reverse is executed.

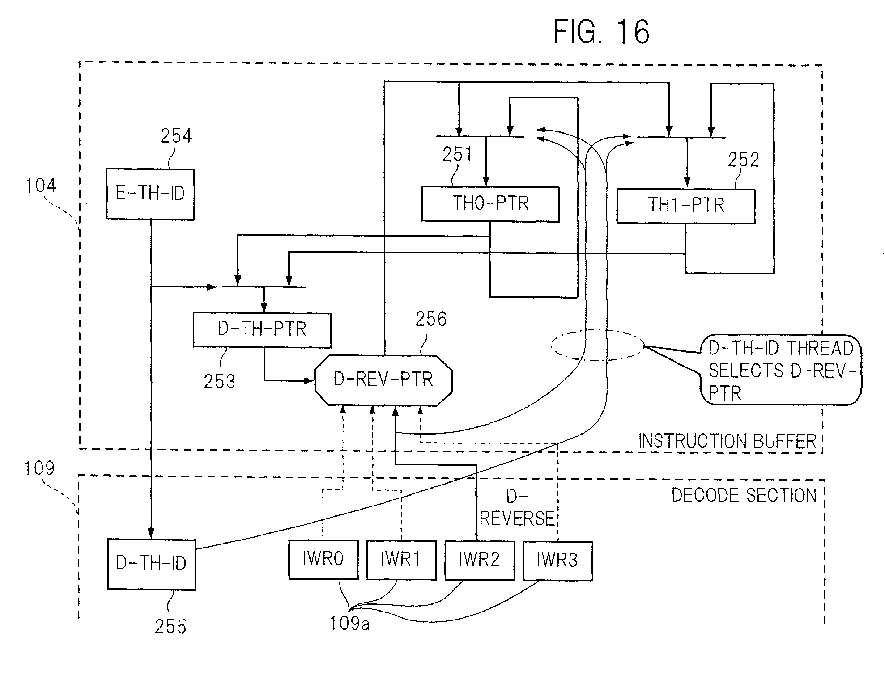

FIG. 16 is a conceptual diagram illustrating a flow of control of each pointer in the CPU 10, when D-reverse is executed.

FIG. 16 illustrates a state in which the thread-0-pointer 251, the thread-1-pointer 252, the storage pointer 253, and the target thread designating section 254, which are illustrated in FIG. 12 are provided for the instruction buffer 104 that also serves to control of instruction input to the decode section 109. In this embodiment, there is further provided a D-reverse pointer 256 to be referred to at the time of re-presentationwhen D-reverse is executed in the instruction buffer 104.

The re-presentation target thread designating section 255 illustrated in FIG. 12 is provided in the decode section 109 as indicated in FIG. 16.

At the time of normal presentation explained with reference to FIG. 12, each time presentation is performed, the thread-0-pointer 251 or the thread-1-pointer 252 is updated. Further, contents before a pointer designated by the target thread designating section 254 are copied to the storage pointer 253 and designated contents of the target thread designating section 254 are copied to the re-presentation target thread designating section 255.

When D-reverse is executed, contents of the D-reverse pointer 256 are generated by using the contents of the storage pointer 253 as follows.

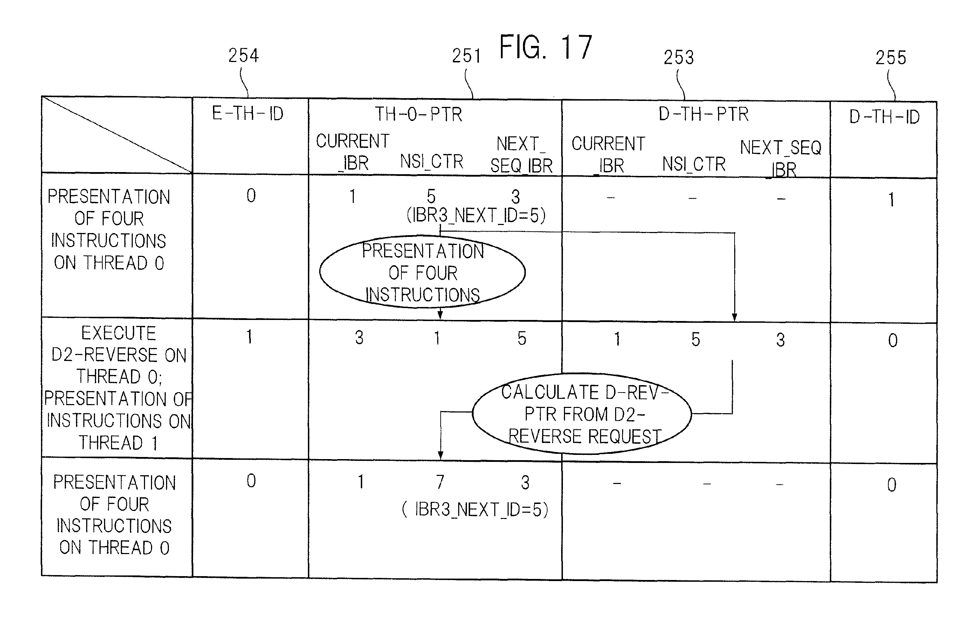

FIG. 17 is a diagram illustrating generation of contents of the storage pointer 253 in a table form with the use of concrete numerical values.

In the example of FIG. 17, of the four presented instructions in the thread 0, D-reverse is executed for an instruction in the IWR 109a at the second stage.

At the time of presentation of the four instructions in the thread 0, a number of a thread having been stored in the target thread designating section 254 is "0". In the example of FIG. 17, the TH0_CURRENT_IBR information 18, the TH0_NSI_CTR information I10, and the THO_NEXT_SEQ_IBR information I9 in the thread-0-pointer 251 that are to be referred to at this time are "1", "5", and "3", respectively. These three pieces of information are referred to, and so four instructions from the fifth to the eighth in the IBR 104a at the first stage, among the IBR 104a from at the zeroth to seventh stages in the instruction buffer 104 are presented. After presentation, contents of the thread-0-pointer 251 are updated to "3", "1", and "5" for next presentation. Also, contents of the thread-0-pointer 251 before update are saved in the storage pointer 253, and the thread number "0" having been stored in the target thread designating section 254 is copied to the re-presentation target thread designating section 255.

Here, if "1" is outputted to the signal line for D2_REVERSE signal S2 as the D2_REVERSE signal S2, and as a result, when D-reverse is executed to the instruction in the IWR 109a at the second stage among the presented four instructions, then contents of the D-reverse pointer 256 are generated from contents of the thread-0-pointer 251 having been saved in the storage pointer 253 at the time of presentation. In the example of FIG. 17, since D-reverse is executed to the instruction in the IWR 109a at the second stage, eventually D-reverse is executed to the seventh instruction corresponding to the third position by counting from the fifth position in the IBR 104a at the first stage. In this embodiment, an instruction subsequent to a D-reversed instruction is invalidated in the decode section 109. Therefore, at the time of re-presentation, a D-reversed instruction is positioned at the top. That is, the CURRENT_IBR information, the NSI_CTR information, and the NEXT_SEQ_IBR information in the D-reverse pointer 256 become "1", "7", and "3", respectively, as illustrated in FIG. 17.

In this way, when contents of the D-reverse pointer 256 are generated, as illustrated in FIG. 16, copied contents of the thread pointer at the time of executing D-reverse, which is designated by the re-presentation target thread designating section 255, are updated with the generated contents of the D-reverse pointer 256. The updated contents of the pointer are maintained until re-presentation is executed and processing of the thread resumes. If a stall factor is resolved after D-reverse, presentation is performed based on the maintained contents of the pointer.

Using a flowchart, the above-explained processing flow from the occurrence of stall to the execution of re-presentation will be illustrated.

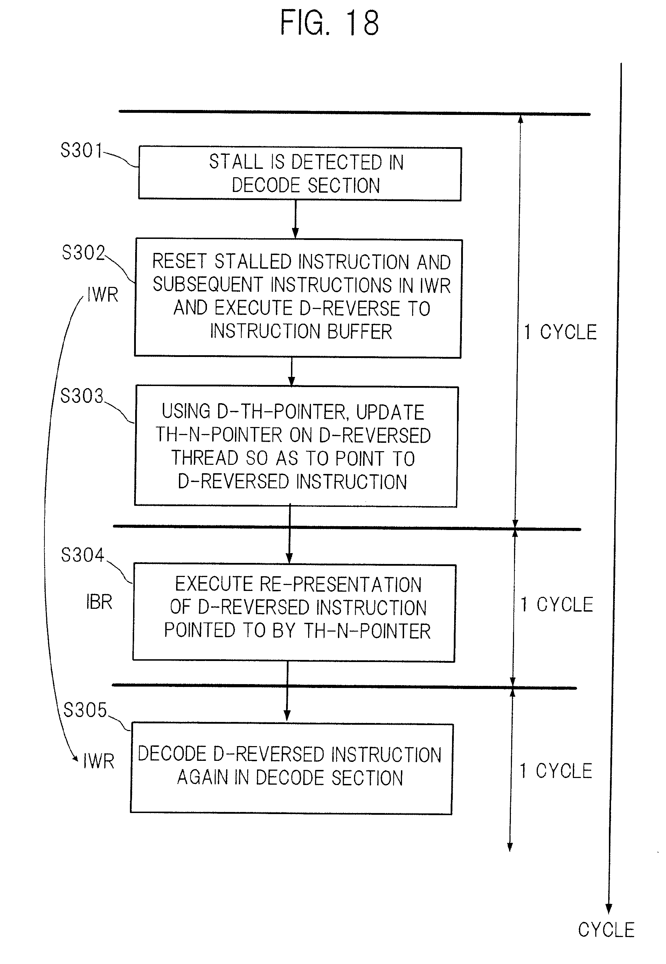

FIG. 18 is a flowchart illustrating a flow of processing from an occurrence of stall until re-presentation and decoding are performed.

Firstly, when stall is detected in the decode section 109 (step S301), an instruction subsequent to an instruction confirmed to stall inclusive is invalidated in the decode section 109 and D-reverse is executed to the invalidated instruction (step S302). Thereafter, contents of the D-reverse pointer 256 are generated and a thread pointer of the tread to which the instruction confirmed to stall belongs is updated (step S303). In this embodiment, processing up to here is executed in one cycle.

Here, it is supposed that a stall factor is resolved, for example, due to such a reason that commit of a preceding instruction has completed in a same cycle as a cycle in which D-reverse has been executed and a required operand is obtained. In this embodiment, in this case, in a next cycle after the cycle in which processing of from step S301 to S303 has been executed, re-presentation is executed to one thread to which the instruction confirmed to stall belongs, prior to another thread different from the one thread to which the instruction confirmed to stall belongs (step S304). And in a further next cycle of that re-presentation (step S304), an instruction subsequent to the instruction confirmed to stall is decoded (step S305).

The processing represented in the flowchart of FIG. 18 is based on the assumption that the stall factor is resolved in a shortest time. In a case where this assumption is not applicable, in a cycle after D-reverse is executed, until a stall factor is resolved, the decode section 109 is made available to another thread different from a thread to which an instruction confirmed to stall belongs, and processing of another thread is executed by priority.

Sometimes there is a case where a program executed by the CPU 10 tries to execute processing of another thread different from one thread to which an instruction confirmed to stall belongs by priority, but lacks an target to be prioritized due to a fact that another thread is in an idle state or not being executed by the CPU 10, that an instruction in another thread is not fetched and there is no instruction ready for processing. In this embodiment, in such a case, invalidation and execution of D-reverse to an instruction subsequent to the stall instruction is stopped, and the instruction subsequent to the stall instruction is held in the IWR 109a of the decode section 109. To enable such processing, the present embodiment is further provided with an absence detection circuit for detecting an absence of a target to be prioritized.

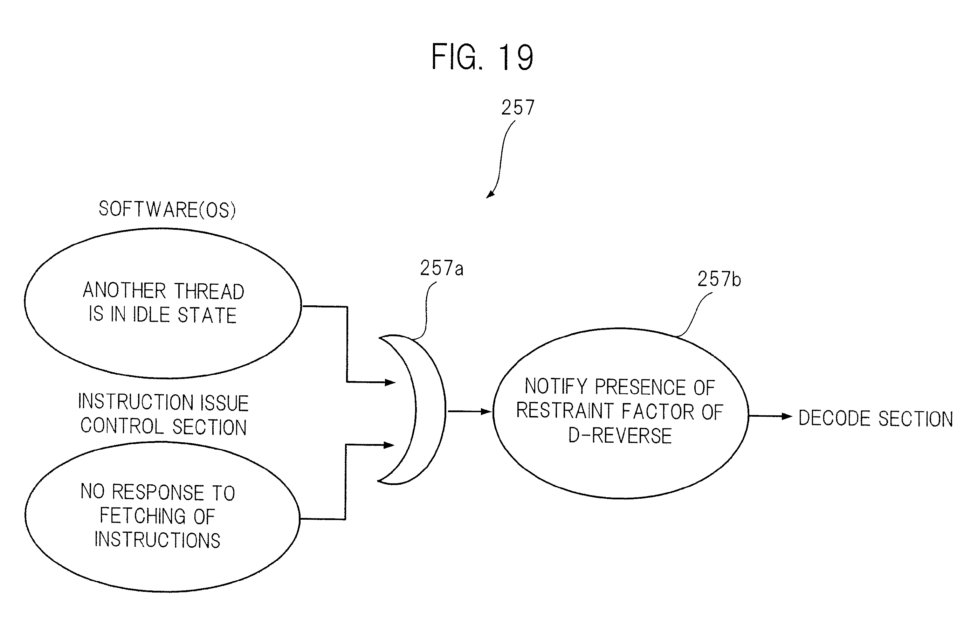

FIG. 19 is a diagram illustrating an absence detection circuit.

As illustrated in FIG. 19, in this embodiment, when another thread different from a thread currently being processed is in an idle state, an OS notifies as such. Also, when an instruction in another thread different from the thread currently being processed is not fetched and thus there is no instruction ready for processing, the instruction buffer 104 notifies as such.

The absence detection circuit 257 illustrated in FIG. 19 contains an OR operator 257a to output "1" when there is either one of the above two types of notifications, and a notification circuit 257b to notify the decode section 109 of a presence of a restraint condition for invalidation of an instruction subsequent to a stall instruction and for D-reverse execution. When the absence detection circuit 257 notifies the decode section 109 of the presence of the restraint condition, the instruction following the stall instruction is held in the decode section 109 as it is.

In a case where there is no such restraint condition, and the instruction subsequent to the stall instruction is invalidated and D-reverse is executed, so that the decode section 109 is made available to another thread different from the thread to which the stall instruction belongs, processing of the instruction in another thread is performed by a priority as well as monitoring is performed to the stall factor in the instruction buffer 104. When information indicating that the stall factor is resolved is obtained, the instruction buffer 104 performs the above-described re-presentation to the thread to which the stall instruction belongs.

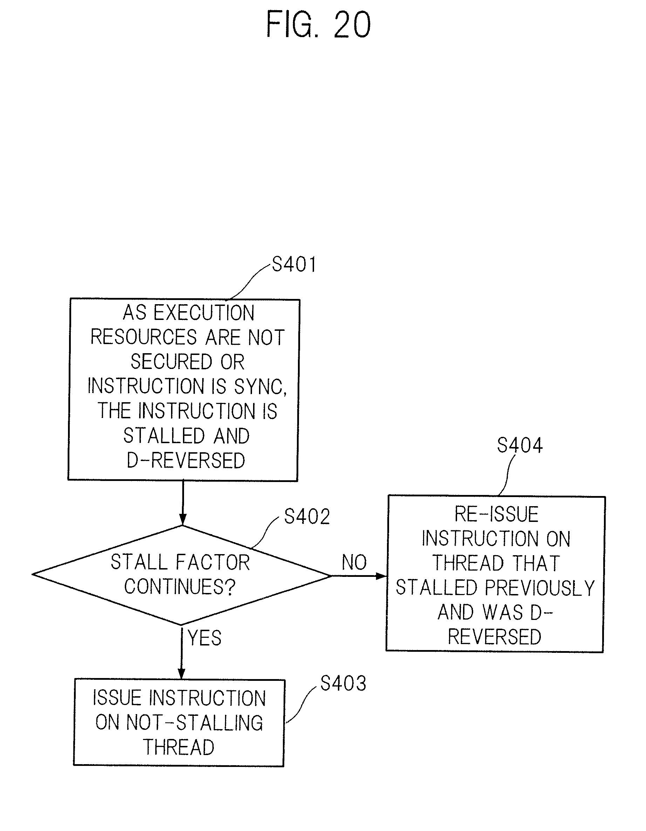

FIG. 20 is a flowchart illustrating processing from an occurrence of stall through monitoring of a stall factor to execution of re-presentation.

If an instruction is confirmed to stall due to a stall factor that an execution resource is not secured or an operand is not obtained for an instruction of sync attribute, and thus D-reverse is executed to the stall instruction (step S401), monitoring of a stall factor is performed in the instruction buffer 109 (step S402). This monitoring is performed by checking, in each cycle, a state as to whether or not a register to be used as an execution resource is available or contents of a register in which an operand is stored. In this monitoring, if information indicating that the stall factor still continues is obtained (step S402: Yes), the instruction buffer 109 performs presentation of an instruction in another thread that is not stalled (step 5403). On the other hand, when information indicating that the stall factor is resolved is obtained (step S402: No), the instruction buffer 109 performs re-presentation of an instruction in the stalled thread (step S404).

Next, explanation will be made about release of the IBR 109a of the instruction buffer 109.

In this embodiment, at a time when the eight instructions in the IBR 109a are all D-released in the decode section 109, the eight instructions are erased and the IBR 109a of the instruction buffer 109 is released. If there is no occurrence of stall, since the eight instructions in the IBR 109a are D-released in the decode section 109 by four in decoding each time, thereby the IBR 109a is released when decoding in two times is finished.

At this point, if re-presentation is executed from a halfway position due to the occurrence of stall, there may be a case in which four instructions to be D-released by decoding in one time may spread across two of the IBRS 109a. To cope with such a situation, the present embodiment uses the following technique to efficiently release the IBR 109a.

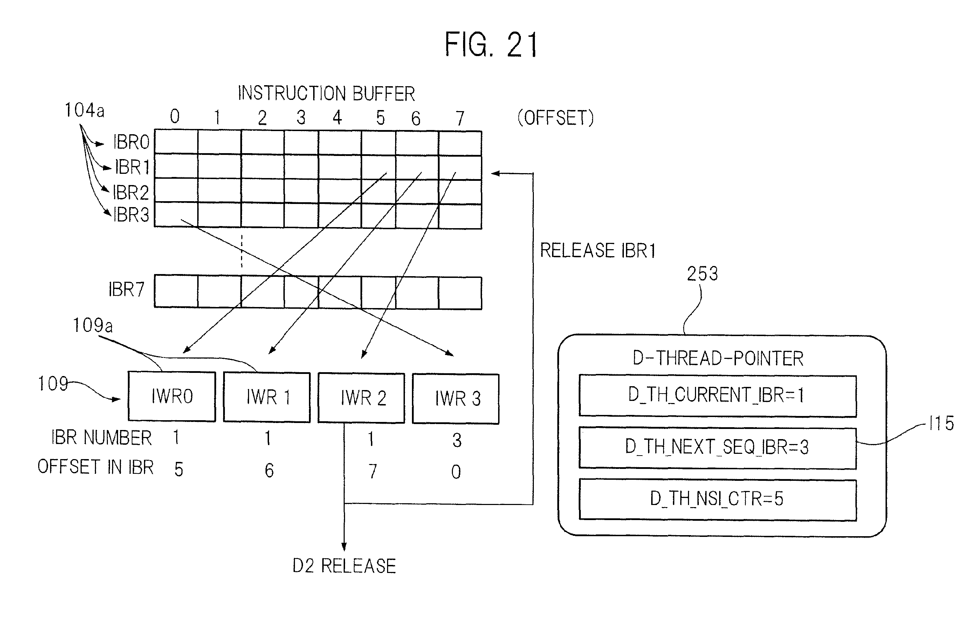

FIG. 21 is a diagram for explaining release of IBR 109a when four instructions to be D-released by decoding in one time spread across two IBRS 109a.

In the example of FIG. 21, the four instructions counting from the fifth instruction in the IBR 109a at the first stage are presented to the decode section 109. Here, the instructions in the IBR 109a at the first stage exist no further than the seventh instruction corresponding to the third instruction in the IBR 109a at the first stage. As such, in accordance with a stage number designated by the above-described pointer, of the IBR 109a from which a next instruction is taken out, an instruction at the zeroth position in the IBR 109a at the designated stage number is presented as the fourth instruction. In the example of FIG. 21, as the D_TH_NEXT_SEQ_IBR information I15 of the storage pointer 253 indicates, the stage number of the IBR 109a from which a next instruction is taken out is "3", therefore an instruction at the zeroth position in the IBR 109a at the third stage is presented as the fourth instruction.

The presented four instructions are sequentially stored into four of the IWRS 109a from the zeroth stage to the third stage, and decoded in this stored order and D-released. In the example of FIG. 21, at a time when the instruction in the IWR 109a at the second stage is D-released, all the instructions in the IBR 104a at the first stage in the instruction buffer 104 are completely D-released. In this way, in the present embodiment, when a condition to release the IBR 104a is ready, the IBR 104a is released without waiting for completion of instruction decode in all the IWR. In the example of FIG. 21, when the instruction in the IWR 109a at the second stage is D-released, the IBR 104a at the first stage is released. By such a releasing method, efficiency in processing is achieved in the present embodiment.

As explained above, in the CPU 10 of the present embodiment, if stall of an instruction is confirmed by the decode section 109, an instruction subsequent to a stall instruction in a same thread is invalidated to make the decode section 109 available to another thread. A thread to which the stall instruction belongs is resumed from presentation after a stall factor is resolved. This enables the CPU 10 of FIG. 8 to perform processing up to instruction input to the reservation station 210 smoothly for the two types of threads.

Hereafter, processing in the CPU 10 after instruction input of instructions to the reservation station 210 will be explained with reference to FIG. 8.

The decode section 109 allocates a IID of from "0" to "63" to a decoded instruction according to a decoding order in each thread. And the decode section 109 delivers the decoded instruction along with the IID to the reservation station 210. In this embodiment, the CSE 12 contains thirty-two entry groups 127_0 for the thread 0 and thirty-two entry groups 127_1 for the thread 1, as described above. When delivering the decoded instruction to the reservation station 210, the decode section 109 sets an IID allocated to the instruction to be decoded in an empty entry in an entry group for a thread to which the instruction to be decoded belongs.

The reservation station 210 inputs instructions ready with required input information for execution to execution pipelines 220 sequentially in an order in which an instruction stored first is taken out first.

The respective execution pipelines 220 corresponds to the respective six types of computing units illustrated in FIG. 6. After the execution pipelines 220 finish execution, an execution result is stored in a register update buffer 230. This register update buffer 230 corresponds to the GUB 115 and the FUB 117 in FIG. 6. Also, when the execution pipelines 220 finish execution, an execution completion notification is sent to the CSE 127. In the execution completion notification, an IID of an instruction corresponding to the execution completion notification and a piece of commit information required for commit of the instruction are described. Upon receipt of the execution completion notification, the CSE 127 stores the piece of commit information described in the execution completion notification in an entry to which the same IID as the IID described in the execution completion notification is set, among the sixty-four entries contained in the CSE 127.

The CSE 127 also contains an instruction commit section 127_3 to update a register in accordance with a piece of commit information corresponding to each instruction stored in the respective entry groups 127_0 and 127_1, according to a processing order in the thread by in-order execution.

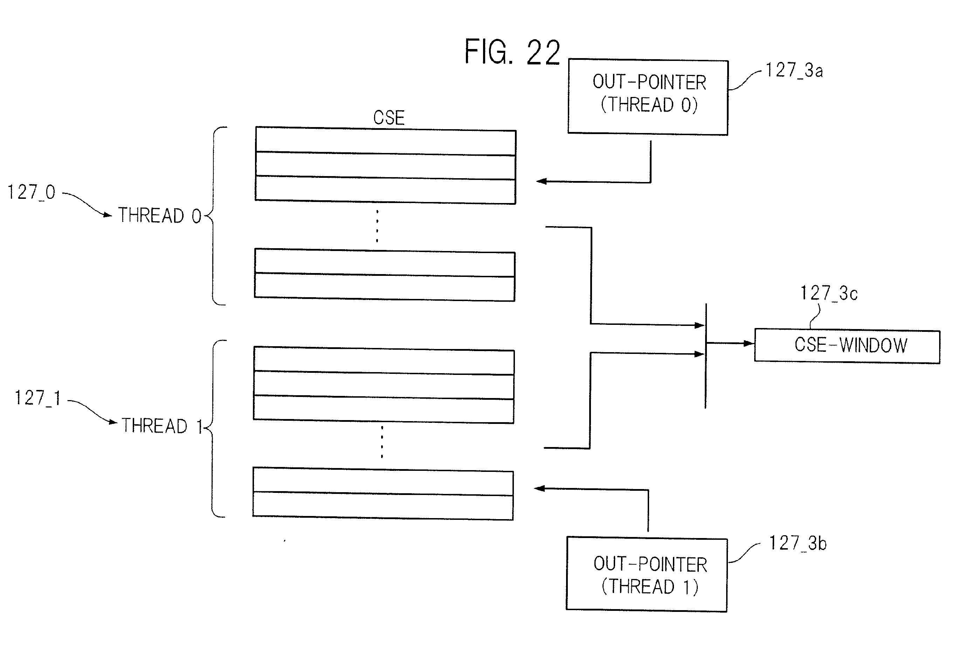

FIG. 22 is a conceptual diagram illustrating how a register is updated by in-order execution in the CSE 127.

The instruction commit section 127_3 contained in the CSE 127 has a thread-0-out-pointer 127_3a in which an IID of an instruction to be committed next in the thread 0 is described; a thread-1-out-pointer 127_3b in which an IID of an instruction to be committed next in the thread 1 is described; and a CSE-window 127_3c for determining an instruction to be actually committed.

The CSE-window 127_3c selects either one of the entry in which an IID of the thread-0-out-pointer 127_3a is set and the entry in which an IID of the thread-1-out-pointer 127_3b is set, and determines as a target to be committed an instruction corresponding to the entry in which the commit information is stored. If both of the entries store the commit information, the CSE-window 127_3c basically switches the threads targeted for commit by turn.

In this way, when the instruction targeted for commit is determined, the instruction commit section 127_3 updates a program counter and a control register corresponding to the thread to which the instruction belongs, as illustrated in FIG. 8. Further, the instruction commit section 127_3 gives a command to the register update buffer 230 to update a register corresponding to the thread to which the instruction targeted for commit belongs, of registers 240_0 and 240_1 provided for each thread corresponding to the GPR 114 and the FPR 116 in FIG. 6. Additionally, the instruction targeted for commit, which is held in the CSE 127, is deleted.

As described above, in the CPU 10 of the present embodiment, when stall of an instruction is confirmed in the decode section 109, smooth and efficient processing is obtained by making the decode section 109 available to another thread.

Incidentally, up to this, explanation is made about performing processing of instructions in multiple threads in the CPU 10 with the SMT function by a technique such as executing above-described D-reverse and re-presentation.

According to such technique, it is possible to obtain another effect described later, in addition to efficient processing of instructions in multiple threads. This another effect may be obtained not only in the CPU 10 with the SMT function according to the present embodiment, but also in a single-threading type CPU. Hereafter, for the sake of simplifying explanation of this another effect, processing in the single-threading type CPU will be described.

Firstly, in what situation this another effect is obtained will be explained.

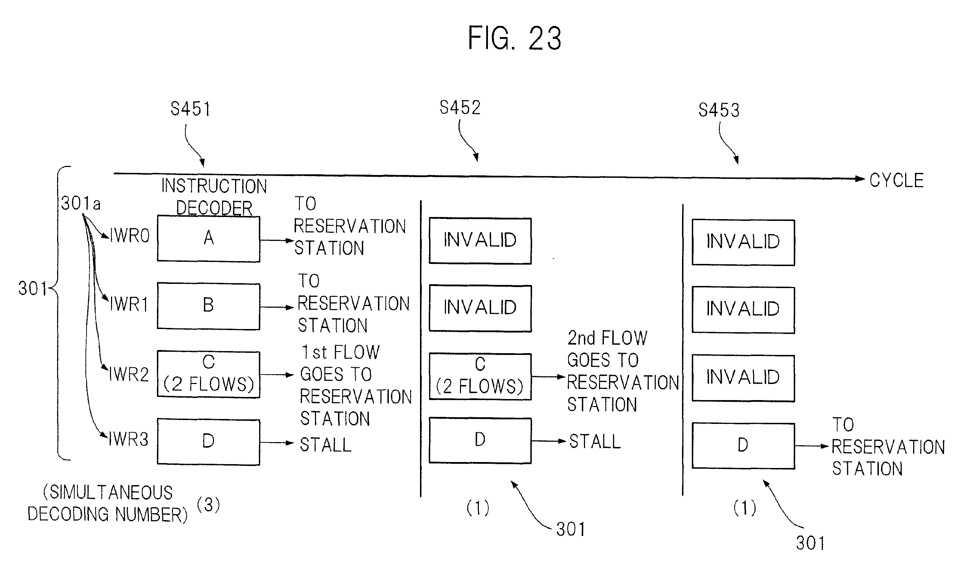

FIG. 23 is a diagram explaining a situation in which another effect different from an enhanced efficiency in instruction processing is obtained.

Among instructions processed by a CPU, there is one called multi-flow instruction that is divided into multiple instruction parts at the time of decode and decoded over multiple cycles. In the example of FIG. 23, in the first cycle of FIG. 23 (step S451), of four instructions A, B, C, and D stored in four IWR 301a of a decode section 301, the instruction C stored in the IWR 301a at the second stage is a multi-flow instruction of two-flow type. The instruction D subsequent to the instruction C may not be decoded until the preceding instruction C is D-released. The instruction C stored in the IWR 301a at the second stage requires two cycles for decode, so that the subsequent instruction D stalls as illustrated in FIG. 23. In the following second cycle (step S452), decode for the second cycle of the instruction C is performed, followed by stall of the subsequent instruction D, and in the third cycle (step S453), finally the subsequent instruction D is D-released and finally execution of the instructions is started.

The number of decoded instructions in each of the three cycles in FIG. 23 are, three in the first cycle (step S452), one in the second cycle (step S452), and one in the third cycle (step S452). In this way, in the example of FIG. 23, there continues two cycles in which only one instruction is decoded, and thus throughput of decode is low.

Under these circumstances, applying above-described D-reverse or re-presentation as in the following makes it possible to obtain another effect of improving throughput of decode, which is a different effect from the enhanced efficiency in instruction processing by the SMT function.

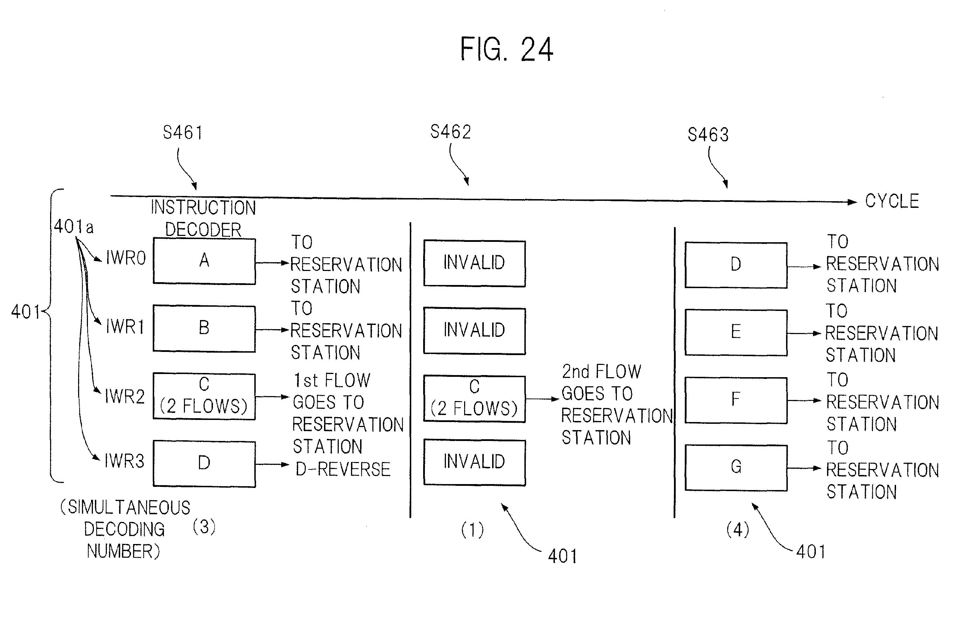

FIG. 24 is a diagram for explaining another effect of improving throughput.

Also in the example of FIG. 24, similarly to FIG. 23, of four instructions A, B, C, and D stored in four IWR 401a of an instruction buffer 401, the instruction C stored in the IWR 401a at the second stage is a multi-flow instruction of two-flow type.

In the example of FIG. 24, in the first cycle (step S461), when it is confirmed that the instruction D of sync attribute stalls, because its previous instruction is a multi-flow instruction, the instruction D is immediately invalidated, and for the instruction D, D-reverse is executed from a decode section 401 to an instruction buffer (not illustrated). In the following second cycle (step S462), the decode for the second cycle of the instruction C is performed. Since the stall factor of the instruction D is resolved in this second cycle (step S462), in the following third cycle (step S463), four instructions D, E, F, and G subsequent to the instruction D are stored in the four IWR 401a and decoded. The number of decoded instructions in each of the three cycles in FIG. 24 are, three in the first cycle (step S452), one in the second cycle (step S452), and four in the third cycle (step S452).

As in the example of FIG. 23, when a stall instruction is decoded without executing D-reverse or re-presentation, only the stall instruction is decoded. On the other hand, as in the example of FIG.24, when D-reverse or re-presentation is executed at the time of decoding a stall instruction, not only the stall instruction but also an instruction subsequent to the stall instruction is decoded, thereby the effect of improved throughput is obtained.

Up to this, explanations have been made about the effect of improved throughput in processing of a multi-flow instruction, by taking processing in a single-threading type CPU as an example. However, this effect may also be obtained when a CPU with the SMT function processes a multi-flow instruction.

In the above description, the CPU 10 that simultaneously processes instructions in two types of threads is taken as an example of a CPU with the SMT function. However, the CPU with the SMT function may simultaneously process instructions in three types of threads or the like.

## Claims

1. An instruction control apparatus, comprising:
an instruction fetch section to obtain instructions from a thread including a plurality of instructions;
an instruction buffer to hold the obtained instructions;
an instruction decode section to hold and decode instructions outputted from the instruction buffer;
an instruction execution section to execute the decoded instructions; and
an instruction input control section that, when the instructions held in the instruction buffer are inputted to the instruction decode section, if an instruction preceding to the instructions held in the instruction buffer is using the instruction execution section, invalidates the instructions held in the instruction decode section and an instruction subsequent to the instructions held in the instruction decode section and causes the instruction buffer to input again the instructions held in the instruction decode section and an instruction subsequent to the instructions held in the instruction decode section.

2. The instruction control apparatus according to claim 1, wherein the instruction fetch section obtains the instructions from a plurality of the threads,
the instruction buffer holds the obtained instructions included in the plurality of the threads,
the instruction decode section holds an instruction that belongs to one of the plurality of the threads, and
the instruction input control section holds, if the instruction input control section inputs again, to the instruction decode section, an instruction that is caused to be held again in the instruction buffer and belongs to the thread and the instruction subsequent to the instructions held in the instruction buffer, an instruction that belongs to another thread different from the thread in the instruction decode section.

3. The instruction control apparatus according to claim 2, wherein the instruction decode section holds the instructions targeted for the reissuing without requesting the instruction input control section of the inputting again, if the instruction input control section does not hold an instruction that belongs to another thread different from the thread.

4. The instruction control apparatus according to claim 1, wherein the instruction input control section has information representing that the instruction targeted for the inputting again is executable, and if being requested of the inputting again from the instruction decode section, performs the inputting again based on the information information.

5. The instruction control apparatus according to claim 1, wherein the instruction input control section includes an instruction input buffer to hold the instructions to be inputted to the instruction decode section, and releases the instruction input buffer if all the instructions held in the instruction input buffer are decoded by the instruction decode section.

6. The instruction control apparatus according to claim 1, wherein if the instruction decode section determines that the decoded instructions are not yet ready with a condition in which the decoded instructions are to be executed, the instruction decode section requests the instruction input control section to input again the instruction subsequent to the instructions.

7. An instruction control method of an instruction control apparatus comprising an instruction buffer to hold instructions, an instruction decode section to hold and decode instructions outputted from the instruction buffer, and an instruction execution section to execute the decoded instructions, the instruction control method comprising:
determining, when the instructions held in the instruction buffer are inputted to the instruction decode section, whether or not an instruction preceding to the instructions held in the instruction buffer is using the instruction execution section;
invalidating, if an instruction preceding to the instructions held in the instruction buffer is using the instruction execution section, the instructions held in the instruction decode section and an instruction subsequent to the instructions held in the instruction decode section; and
causing the instruction buffer to input again the instructions held in the instruction decode section and an instruction subsequent to the instructions held in the instruction decode section.
